**Europäisches Patentamt**

**European Patent Office**

**Office européen des brevets**

(19)

(11) Veröffentlichungsnummer: **0 202 556 B1**

(12) # EUROPÄISCHE PATENTSCHRIFT

(45) Veröffentlichungstag der Patentschrift: **05.08.92**

(51) Int. Cl.⁵: **G02C 5/16**, G02C 5/14

(21) Anmeldenummer: **86106344.4**

(22) Anmeldetag: **07.05.86**

(54) **Bügelendstück für einen Bügel einer Brillenfassung.**

(30) Priorität: **10.05.85 DE 3516956**
**30.04.86 DE 3614637**

(43) Veröffentlichungstag der Anmeldung:
**26.11.86 Patentblatt 86/48**

(45) Bekanntmachung des Hinweises auf die
Patenterteilung:
**05.08.92 Patentblatt 92/32**

(84) Benannte Vertragsstaaten:
**AT BE CH DE FR GB IT LI LU NL SE**

(56) Entgegenhaltungen:
**EP-A- 0 170 721      DE-A- 2 504 669**
**DE-A- 3 118 157      DE-A- 3 319 826**
**DE-U- 8 336 526      US-A- 3 649 106**
**US-A- 4 389 102**

(73) Patentinhaber: **EYEMETRICS-SYSTEMS AG**
**Steinbockstrasse 4**
**CH-7001 Chur(CH)**

(72) Erfinder: **Anger, Wilhelm**
**Chesa Pas-chüra**
**CH-7500 St. Moritz-Suvretta(CH)**
Erfinder: **Wiedmann, Helmut**
**Hundsbergstrasse 29**
**CH-7100 Heilbronn(CH)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**W-8000 München 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Bügelendstück für einen Bügel einer Brillenfassung gemäß dem Obergriff von Patentanspruch 1.

Ein solches Bügelendstück ist bekannt (US-PS 389 102). Bei diesem bekannten Bügelendstück ist der erste Abschnitt das hintere Ende des im wesentlichen gerade verlaufenden Hauptteil eines herkömmlichen Bügels. Der zweite Abschnitt ist einstückig mit dem ersten Abschnitt ausgebildet und verläuft von diesem aus schräg nach hinten unten, wie dies bei sogenannten Golfbügeln der Fall ist. Das den dritten Abschnitt bildende flexible Band ist ein elastischer Faden, der zwischen dem unteren Ende des zweiten Abschnitts und einer Stelle im Bereich der Verbindung zwischen dem ersten und zweiten Abschnitt in Art einer Sehne gespannt ist. Der dritte Abschnitt verläuft somit zwischen seinem beiden Enden gerade, ist gedehnt und steht unter Vorspannung. Beim Aufsetzen einer mit diesem bekannten Bügelendstück versehenen Brille legt sich der elastische Faden im Bereich des übergangs zwischen der Ohrmuschel und dem Schädel des Brillenträgers an die Ohrmuschel oder die Rille zwischen Ohrmuschel und Schädel an, wobei der Faden die Ohrmuschel teilweise umschlingt.

Dieses bekannte Bügelendstück hat den Vorteil, daß vom gespannten Faden ständig eine Kraft auf den Bügel ausgeübt wird, die diesen nach hinten zu ziehen versucht, damit die Brille ihren korrekten Sitz auf der Nase beibehält. Wenn die Brille beispielsweise aufgrund einer stoßweisen Belastung nach vorne verlagert werden sollte, wird diese Kraft aufgrund des elastischen, gespannten Fadens größer, damit sie die Brille in ihre korrekte Position zurückzieht. Dem stehen jedoch auch Nachteile gegenüber. Wenn der elastische Faden die Ohrmuschel nur wenig umschlingt, ist der Kontaktbereich zwischen dem elastischen Faden und der Ohrmuschel klein, so daß es im Kontaktbereich zu verhältnismäßig hohen Drücken und somit störenden Druckstellen kommt. Wenn der Umschlingungswinkel groß ist, ist zwangsläufig auch die Spannung im elastischen Faden größer, so daß zwar der Kontakbereich größer ist, jedoch auch die Resultierende der dort zu übertragenden Kräfte, was wiederum zur Folge hat, daß die Druckbelastung nicht entsprechend der Vergrößerung des Kontaktbereichs abnimmt. Es lassen sich somit Druckstellen kaum verhindern. Bequemer Sitz der Brille wird nicht erreicht. Ferner erfolgt die Kraftanleitung zwischen dem Ohr und dem unteren Ende des zweiten Abschnitts über einen gedehnten, unter Spannung stehenden Bereich des elastischen Fadens. Dieser Bereich stellt eine Feder dar, die je nach Belastung mehr oder weniger gedehnt wird, so daß das Bügelendstück in vertikaler Richtung keine bestimmte Stellung einnimmt, sondern je nach den wirkenden Kräften höher oder tiefer angeordnet ist und unter ungünstigen Umständen sogar Vertikalschwingungen ausführen kann. Die Brille wird somit nicht möglichst ruhig und in gleichbleibender Relativlage zu den Augen gehalten.

Aus der US-PS 4 389 102 ist ferner ein Bügelendstück bekannt, bei dem der elastische Faden ersetzt ist durch einen einendig geschlossenen, in Längsrichtung geschlitzten Schlauch, der auf den ersten und zweiten Abschnitt des Bügelendstücks so geschoben ist, daß der übergangsbereich zwischen dem ersten und zweiten Abschnitt durch den Schlitz aus dem Schlauch nach außen vorsteht und daß das untere Ende des zweiten Abschnitts im geschlossenen Ende des Schlauches sitzt. Der Schlauch ist so weit auf das übrige Bügelendstück geschoben, daß er in seiner Längsrichtung gespannt und gedehnt und dadurch wiederum in seinem sehnenartig verlaufenden Bereich radial kontrahiert ist. Dies verleiht dem Schlauch zwar auf seiner der Ohrmuschel zugewandten Seite eine gewisse Konkavität, die einen verhältnismäßig großen Kontaktbereich mit dem Ohr ermöglichen würde; dieser größere Kontaktbereich ist jedoch durch Dehnung des Schlauches aufgrund erhöhter Längsspannung erzielt, was den Schlauch zugleich versteift und ihm dadurch einerseits die erwünschte federnde Nachgiebigkeit senkrecht zur von ihm gebildeten Sehne nimmt und andererseits im Kontaktbereich verhärtet und versteift und dadurch wiederum die Entstehung von Druckstellen fördert.

Der Erfindung liegt die Aufgabe zugrunde, das gattungsgemäße Bügelendstück derart auszubilden, daß es zugleich sowohl sicheren Halt des Bügels gewährleistet, als auch der Entstehung von Druckstellen vorbeugt und somit den Tragekomfort der mit dem Bügelendstück versehenen Brille erhöht.

Diese Aufgabe wird erfindungsgemäß durch die Merkmale im kennzeichnenden Teil von Patentanspruch 1 gelöst. Bei dem erfindungsgemäßen Bügelendstück besteht der dritte Abschnitt aus einem Band, das zugleich einerseits flexibel, anderseits aber in seiner Länge im wesentlichen nicht veränderbar ist. Dieses Band ist bereits im unbelasteten Zustand des Bügelendstücks bogenförmig gekrümmt. Dabei versteht es sich, daß das den dritten Abschnitt bildende Band diese Eigenschaften als Teil des Bügelendstücks hat (und beispielsweise nicht lediglich vor dem Zusammenfügen mit dem ersten und dem zweiten Abschnitt, nach dem Zusammenfügen jedoch nicht mehr). Ferner versteht es sich, daß die im Hinblick auf die Eigenschaften des Bandes gemachten Angaben wie beispielsweise die Angabe "flexibel" und die Angabe "im wesentlichen weder dehn- noch stauchbar" Angaben sind, die sich auf den bestimmungsgemäßen Gebrauch des Bügelendstücks und die dabei auftretenden Belastungen beziehen. Bei bestimmungsgemässem Gebrauch wird das Bügelstück belastet durch die wahrend des Aufsetzens und Absetzens der Brille am Bügelendstück wirkenden Kräfte sowie die Kräfte, die bei aufgesetzter Brille zum Halten der Brille in gewünschter Position erforderlich sind. Der unbelastete Zustand des Bügelendstück bei abgenommener Brille befindet, während das Bügelendstück beispielsweise an seinem ersten Abschnitt gehalten wird und der Schwerkraft unterliegt, ansonsten aber frei von äußeren einwirkenden Kräften ist. Die vom Band geforderte Flexibilität bedeutet somit, daß das Band durch die bei bestimmungsgemäßem Gebrauch auftretenden Kräfte, und zwar insbesondere durch die bei aufgesetzter Brille ohne besondere zusätzliche Beanspruchung am dritten Abschnitt auftretenden Kräfte, biegbar sein soll. Die vom den Abschnitt bildenden Band geforderte Längenkonstanz bedeutet, daß sich die Länge des Bandes (gemessen entlang seiner Mittelinie) durch die im belasteten Zustand auftretenden Kräfte, insbesondere durch die bei aufgesetzter Brille ohne zusätzliche Beanspruchung auftretenden Kräfte, im wesentlichen nicht ändert. Daß das Band im unbelasteten Zustand des Bügelendstücks nach hinten bogenförmig gekrümmt ist, bedeutet, daß das Band im westenlichen diesen bestimmten bogenförmig gekrümmten Verlauf beibehält, solange das Bügelendstück im vorstehend genannten Sinne unbelastet ist, und nach einer Belastung erneut einnimmt. Beispielsweise eine Änderung der Lage des unbelasteten Bügelendstücks im Raum ändert den Verlauf des bogenförmig gekrümmten Bereichs praktisch nicht.

Die für die vom ersten und zweiten Abschnitt gebildete Einheit vorgeschriebene Formstabilität liegt - analog zu den vorstehenden Erläuterungen hinsichtlich des dritten Abschnitts - bei bestimmungsgemäßem Gebrauch des Bügelendstücks vor. Gewisse Federungseigenschaften des ersten und/oder zweiten Abschnitts schließt sie nicht aus. Die Formstabilität gewährleistet jedoch, daß die Einheit aus dem ersten und zweiten Abschnitt eine hinreichend feste Halteeinrichtung zum Halten des dritten Abschnitts bildet, der im belasteten Zustand des Bügelendstücks nicht hinreichend selbsttragend ist.

Schließlich sei klargestellt, daß sich die Begriffe "oben", "unten", "nach hinten" und "nach vorne" auf das Bügelendstück als Teil einer aufgesetzten Brille eines den Kopf aufrecht haltenden Brillenträgers beziehen, wobei "nach vorne" die Richtung vom Bügelendstück zum Mittelteil der Brille bezeichnet.

Bei dem erfindungsgemäßen Bügelendstück verläuft das den dritten Abschnitt bildende flexible Band weder geradlinig zwischen seinen beiden mit den übrigen Abschnitten verbundenen Enden, noch ist es gespannt. Es verläuft vielmehr bogenförmig gekrümmt und ohne resultierende Vorspannung. Dies bedeutet, daß das flexible Band eine gewisse Lose hat, d.h. eine größere Länge, als zum unmittelbaren überbrücken des Abstandes zwischen seinen beiden Enden notwendig ist. Beim Aufsetzen einer mit dem erfindungsgemäßen Bügelendstück versehenen Brille legt sich das flexible, bogenförmig gekrümmte Band von hinten an die Ohrmuschel und/oder den Schädel an, und zwar vorzugsweise in die Rille zwischen der Ohrmuschel und dem Kopf des Brillenträgers. Wenn der bogenförmig gekrümmte Verlauf des flexiblen Bandes zufällig mit der Form der Ohrmuschel oder der genannten Rille übereinstimmt, stellt sich unmittelbar ein Kontakt zwischen dem Band und der Ohrmuschel bzw. dem Schädel in einem großen Kontaktbereich ein. Aber auch dann, wenn diese übereinstimmung zunächst nicht vorliegt, paßt sich das Band aufgrund seiner Felxibilität der Form der Ohrmuschel bzw. der Rille an, so daß sich ein großer Umschlingungswinkel und langer Kontaktbereich ergeben. Diese Eigenschaft des Bandes bedeutet, daß es ein hohes Anschmiegungsvermögen hat. Das Anschmiegen geschieht ohne Ernöhung der Zugkräfte im Band, weil das Band nicht durch elastische Dehnung gelängt zu werden braucht, sondern die für den verhältnismäßig großen Umschlingungswinkel notwendige Bandlänge von vornherein, nämlich schon im unbelasteten Zustand des Bügelendstücks, vorhanden ist. Dieses selbsttätige Anlegen des Bandes ohne Erhöhung der Zugkräfte in demselben ist ermöglicht durch dessen Flexibilität und die bereits im unbelasteten Zustand vorhandene "überlänge", die sich aus dem bogenförmig gekrümmten Verlauf ergibt. Erreicht ist dadurch ein großer Kontaktbereich mit entsprechend niedrigen Drücken, wobei die Drücke nicht nur im Mittel niedrig sind, sondern auch Druckspitzen vermieden sind, weil das Band aufgrund seiner Flexibilität einer einer Druckspitze zugeordneten, verhältnismäßig hohen Kraft ausweichen würde.

Die Trag- bzw Stützkräfte, die vom Ohr bzw. Kopf auf das Bügelendstück wirken, werden über die beiden verhältnismäßig kurzen Bereiche des Bandes in das übrige Bügelendstück eingeleitet, die sich zwischen dem bogenförmig gekrümmten, in Kontakt mit dem Ohr bzw. Schädel stehenden Bereich des Bandes und dem ersten bzw. zweiten Abschnitt des Bügelenstücks befinden. Da eine nennenswerte elastische Dehnung oder Stauchung in diesen kurzen Bereichen nicht stattfindet, haben sie keine Federeigenschaften, die zu Instabilitäten der Abstützung des Bügelendstücks führen könnten.

Die Tatsache, daß der bogenförmig gekrümmte Bereich im unbelasteten Zustand im wesentlichen immer den gleichen Verlauf hat, erleichtert das Abnehmen und insbesondere das Aufsetzen der Brille. Durch Führen des Bügels und somit der formstabilen Einheit aus erstem und zweitem Abschnitt des Bügelendstücks kann beim Aufsetzen der Brille zugleich auch dessen dritter Abschnitt geführt werden, da er eine definierte Lage bezüglich des ersten und zweiten Abschnitts einnimmt.

Das erfindungsgemäße Bügelendstück führt somit zu bequemem, druckstellenfreiem und selbstangepaßtem Sitz des Bügelendstücks am Ohr bzw. Kopf des Brillenträgers bei gleichzeitig sicherer und gleichbleibender Abstützung des zugeordneten Bügels. Schließlich ist insbesondere das Aufsetzen einer Brille mit dem erfindungsgemäßen Bügelendstück nicht erschwert.

Wie sich aus der vorstehenden Erläuterung der Erfindung ergibt, ist eine westenliche Eigenschaft des erfindungsgemäßen Bügelendstücks die Flexibilität bzw. Biegsamkeit des den dritten Abschnitt bildenden Bandes. Diese soll einerseits möglichst groß sein, damit sich das Band weitgehend der Geometrie der Ohrmuschel bzw. des Schädels bei aufgesetzter Brille anpaßt. Zugleich soll sie aber derart sein, daß der bogenförmig gekrümmte Verlauf auch im unbelasteten Zustand beibehalten wird.

Unter Berücksichtigung dieser beiden Forderungen ist die Biegsamkeit des Bandes festzulegen. Da es an seinen beiden Enden von der formstabilen Einheit aus dem ersten und zweiten Abschnitt gehalten wird, ist es nicht notwendig, daß das Band auch einendig festgehalten selbsttragend ist. Vielmehr ist bei optimaler selbsttätiger Anpassungsfähigkeit des flexiblen Bandes dessen Biegsamkeit so groß, daß dann, wenn das Band lediglich an seinem oberen Ende, nicht jedoch an seinem unteren Ende festgehalten ist, bei aufgesetzter Brille allenfalls ein kurzer oberer Bereich des Bandes eine gewisse Stützkraft zum ersten Abschnitt übertragen könnte, der überwiegende Bereich des flexiblen Bandes jedoch lediglich herabhängen würde, ohne zum Abstützen oder Halten der Brille beizutragen. Damit das erfindungsgemäße Bügelendstück die vorstehend erläuterte Flexibilität bzw. das gewünschte Anschmiegungsvermögen hat, ist das Bügelendstück vorzugsweise nach einem oder mehreren der Ansprüche 19 bis 26 ausgebildet.

In vorteilhafter Ausbildung des Bügelendstücks kann vorgesehen sein, daß sich an den bogenförmig nach hinten gekrümmten Bereich des Bandes ein hakenförmig nach hinten oben gekrümmter Verbindungsbereich anschließt, der in den zweiten Abschnitt übergeht, und daß der dritte Abschnitt einschließlich dieses Verbindungsbereichs aus dem gleichen weichen Werkstoff bestehen wogegen der zweite und üblicherweise auch der erste Abschnitt des Bügelendstücks aus einem anderen, festen Werkstoff bestehen. Diese Ausbildung aus den zumindest zwei Werkstoffen ermöglicht es, die Werkstoffe jeweils optimal den geforderten Eigenschaften anzupassen. Der feste Werkstoff für den ersten und zweiten Abschnitt ermöglicht beispielsweise bei geringem Querschnitt hinreichende Stabilität der von den beiden Abschnitten gebildeten Einheit bei gleichzeitig vorhandener Federelastizität. Für den dritten Abschnitt wird vorzugsweise ein sehr anschmiegsamer, leicht biegsamer, weicher Werkstoff mit geringen Rückstellkräften bei Verformung und zugleich niedrigem Verformungsrest nach Verformung gewählt. Als Werkstoffe für den dritten Abschnitt eignen sich somit insbesondere Thermoplaste und Kautschuke, dabei wiederum vorzugsweise Silikonkautschuke, thermoplastische Polyurethan-Elastomere und Polyether-Block-Amide.

Der hakenförmig gekrümmte Verbindungsbereich der vorstehend kurz erläuterten bevorzugten Ausführungsform der Erfindung verbessert das Verformungsverhalten des dritten Abschnitts in zweifacher Weise. Der im bogenförmig gekrümmten Bereich des Bandes bei belastetem Bügelendstück auftretende Zug führt dazu, daß der dem zweiten Abschnitt zugeordnete Schenkel des hakenförmigen Verbindungsbereichs nach oben gebogen wird, wodurch die Hakenspitze nach vorn verlagert wird und sich somit stärker von hinten und ggfs. auch von unten an die Ohrmuschel anlegt. Dies bedeutet, mit anderen Worten, ein selbsstätiges Einhaken des unteren Endes des Bügelendstücks hinter bzw. unter dem Ohr und erhölt somit die Zuverlässigkeit der Festhaltung der Brille. Außer diesem Vorteil tritt der weitere Vorteil auf, daß die geschilderte Verformung des hakenförmigen Verbindungsbereichs das untere Ende des bogenförmig gekrümmten Bereichs des Bandes nach oben verlagert und dadurch noch mehr Bandlänge zur Verfügung steht, die sich selbsttättig um die Ohrmuschel schlingen kann, ohne daß hierzu eine Längendehnung des Bandes notwendig wäre.

Weitere vorteilhafte Ausgestaltungen der Erfindung ergeben sich aus den Unteransprüchen sowie der folgenden Beschreibung von Ausführungsbeispielen unter Bezugnahme auf die Zeichnungen. Es zeigen:

Fig. 1    eine Seitenansicht, teilweise im Schnitt, einer ersten Ausführungsform des Bügelendstücks;

Fig. 2    eine Seitenansicht des Bügelendstücks gemäß Fig. 1 in kleinerem Maßstab zur Erläuterung von dessen Verformungsverhalten;

Fig. 3    eine Draufsicht auf das Bügelendstück gemäß Fig. 2;

Fig. 4    eine ausschnittsweise Darstellung einer Abwandlung der Ausführungs-

Fig. 5     eine ausschnittsweise Darstellung einer weiteren Abwandlung der Ausführungsform gemäß Fig. 1;

Fig. 6     eine ausschnittsweise Darstellung einer weiteren Abwandlung der Ausführungsform gemäß Fig. 1;

Fig. 7     verschiedene Profile, die das den dritten Abschnitt des Bügelendstücks bildende Band haben kann;

Fig. 8     eine Seitenansicht einer zweiten Ausführungfsform des Bügelendstücks;

Fig. 9     eine vergrößerte Schnittdarstellung gemäß A-B in Fig. 8;

Fig. 10     eine ausschnittsweise Seitenansicht einer dritten Ausführungsform des Bügelendstücks;

Fig. 11     eine Seitenansicht einer vierten Ausführungsform des Bügelendstücks;

Fig. 12     eine vergrößte Schnittdarstellung gemäß C-D in Fig. 11;

Fig. 13     eine Seitenansicht, teilweise im Schnitt, zur Erläuterung eines Vorversuchs in Verbindung mit einem ersten Versuch zum Nachweis des Anschmiegungsvermögens der erfindungsgemäßen Bügelendstücke;

Fig. 14     eine schematische Seitenansicht einer ersten Versuchsanordnung zur Durchführung des ersten Versuchs;

Fig. 15     eine Schnittdarstellung gemäß E-F in Fig. 14;

Fig. 16     eine Draufsicht auf einen Prüfkörper, der bei dem ersten Versuch zur Anwendung kommt;

Fig. 17     eine Fig. 16 zugeordnete Seitensicht des Prüfkorpers;

Fig. 18     eine Fig. 16 zugeordnete Ansicht des Prüfkörpers von unten;

Fig. 19     ein Diagramm, das die Versuchsergebnisse eines zweiten Versuchs wiedergibt;

Fig. 20     eine schematische Seitenansicht einer zweiten Versuchsanordnung zur Durchführung des zweiten Versuchs; und

Fig. 21     eine schematische Seitenansicht einer dritten Versuchsanordnung zur Durchführung eines dritten Versuchs.

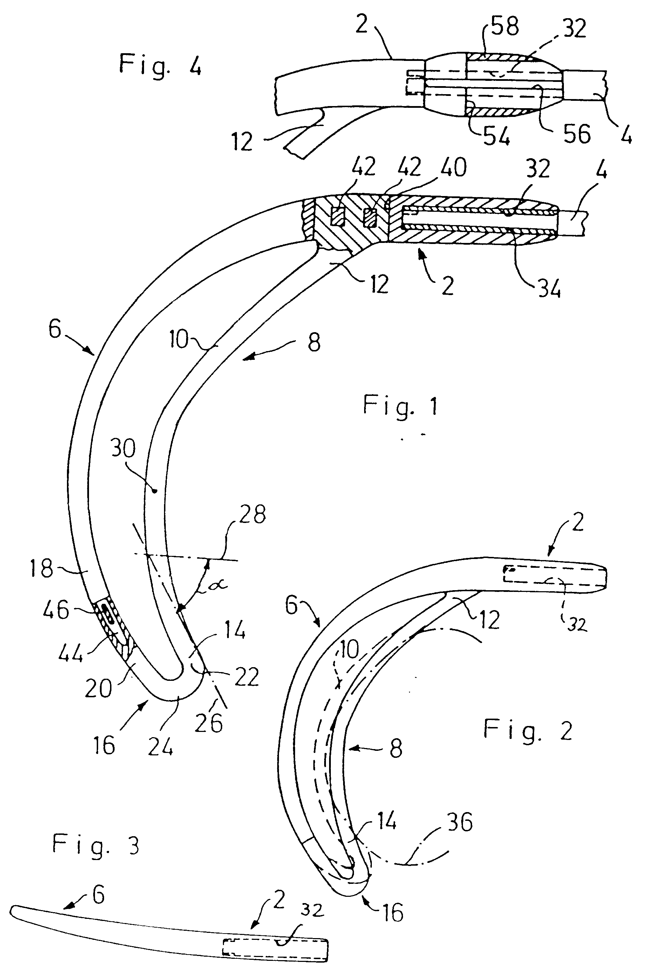

Das Bügelendstück gemäß den Fig. 1 bis 3 umfaßt einen ersten, im westenlichen geradlinig verlaufenden Abschnitt 2, der mit einem geraden Schaft des Bügels einer Brillenfassung fest verbunden ist. Von diesem Schaft ist in Fig. 1 lediglich das Schaftende 4 erkennbar. Der gerade erste Abschnitt 2 hat ein nicht dargestelltes, im wesentlichen flachovales Profil. Nach links in den Fig. 1 und 2 schließt sich an den ersten Abschnitt 2 glatt und stufenlos ein zweiter Abschnitt 6 an, der bogen- bzw. sichelförmig gekrümmt zunächst nach unten und links (in Fig. 1) verläuft. Dieser zweite Abschnitt 6 verjüngt sich mit zunehmendem Abstand vom ersten Abschnitt 2; sein Profil geht allmählich vom flachovalen Profil des ersten Abschnitts 2 in ein Kreisprofil über. Der erste Abschnitt 2 und der zweite Abschnitt 6 sind fest miteinander verbunden und bilden aufgrund geeigneter Werkstoffwahl und Dimensionierung eine formstabile Einheit, d.h. eine Einheit, die bei bestimmungsgemässem Gebrauch einer mit dem beschriebenen Bügelendstück versehenen Brille ihre Form beibehält und allenfalls aufgrund einer gewissen Federlastizität federnd nachgiebig ist.

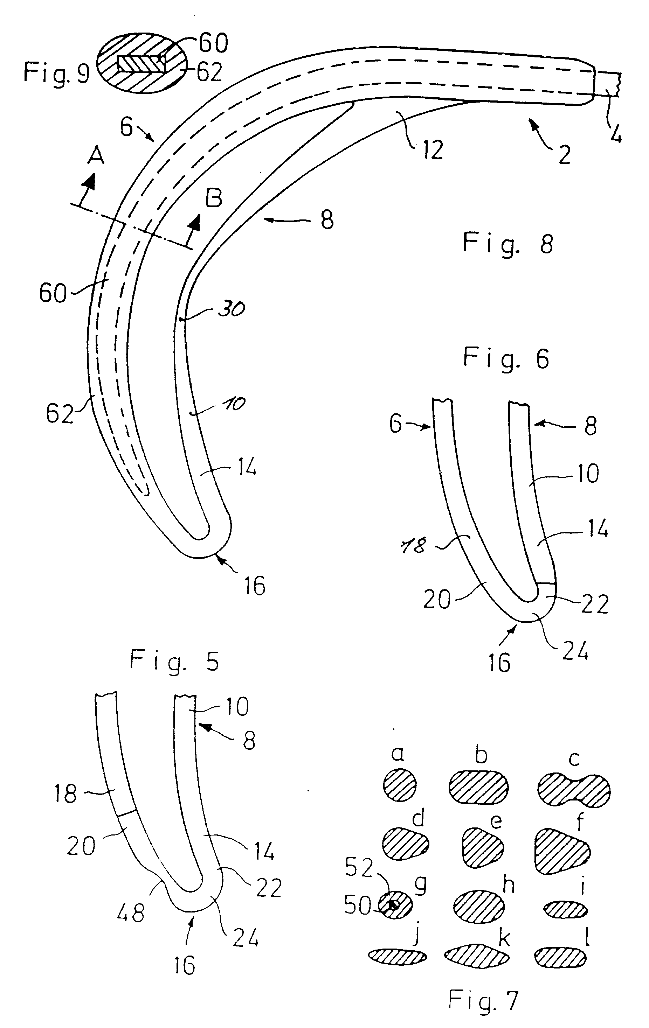

In den Fig. 1 und 2 rechts vom zweiten Abschnitt 6 ist ein dritter Abschnitt 8 des Bügelendstücks angeordnet. Diesen dritten Abschnitt 8 bildet ein flexibles Band 10 mit einem kreisförmigen Profil, wie es in Fig. 7a gezeigt ist. Das Band 10 und somit der dritte Abschnitt 8 ist an seinem oberen Ende 12 fest mit der Einheit aus den beiden Abschnitten 2 und 6 verbunden, und zwar in dargestellter Weise im übergangsbereich zwischen dem ersten Abschnitt 2 und dem zweiten Abschnitt 6. Aus diesem übergangsbereich tritt das Band 10 unten heraus, wie insbesondere Fig. 2 erkennen läßt. Wie die Fig. 1 und 2 deutlich zeigen, hat das Band 10 einen sichelförmig bzw. bogenförmig gekrümmten Verlauf, wobei die Außenseite der Krümmung nach hinten zum ersten Abschnitt 6 gewandt ist und die Innenseite der Krümmung nach vorn, nämlich zum Ohr des Brillenträgers bei aufgesetzter Brille gewandt ist. Der Bereich mit dieser sichelförmigen Krümmung erstreckt sich praktisch über die gesamte Länge des Bandes 10 von seinem oberen Ende 12 bis zum unteren Ende 14 des dritten Abschnitts 8. Zusätzlich zu der vorstehend beschriebenen Krümmung in der Zeichenebene der Fig. 1 und 2 kann das Band 10 auch senkrecht zu dieser Zeichenebene und nicht nur einfach sondern auch mehrfach gekrümmt sein, um dadurch dem dritten Abschnitt ungefähr den räumlichen Verlauf zu geben, den die Rille zwischen der Ohrmuschel und dem Kopf eines Brillenträgers auf der Rückseite des Ohres hat.

Das Band 10 ist nicht nur an seinem oberen Ende 12 sondern auch an seinem unteren Ende 14 fest mit der Einheit aus dem ersten Abschnitt 2 und dem zweiten Abschnitt 6 verbunden. Beim dargestellten Ausführungsbeispiel ist diese Verbindung hergestellt durch einen hakenförmig nach hinten und oben gekrümmten Verbindungsbereich 16, der sich zwischen dem unteren Ende 14 des Bandes 10 und dem unteren Ende 18 des zweiten Abschnitts 6 erstreckt. Der hakenförmige Verbindungsbereich 6 weist einen hinteren Schenkel 20, einen urzen vorderen Schenkel 22 sowie einen zwischen diesen beiden Schenkeln angeordneten torusförmigen Sektor 24 auf, der einen verhältnismäßig kleinen Krümmungsradius hat und sich über annähernd 180° erstreckt. Das untere Ende 14 des Bandes 10 geht glatt in den Schenkel 22 über, und der Schenkel 20 geht glatt in das untere Ende 18 des zweiten Abschnitts 6 über, wobei sich vom Ende 14 bis zum Ende 18 das Profil im wesentlichen nicht ändert; vielmehr setzt sich das Kreisprofil des Bandes 10 fort.

Eine Tangente 26 an das Band 10 in dessen unterem Bereich schließt mit der nicht dargestellten Längsachse des ersten Abschnitts 2, zu der eine Parallele 28 in Fig. 1 eingezeichnet ist, einen Winkel $\alpha$ ein, der kleiner als 90° ist und beim dargestellten Ausführungsbeispiel den Wert 65° hat. Vom unteren Ende 14 aus nach oben verläuft das Band 10 zunehmend steiler bis zu seiner hintersten Stelle 30, die in Fig. 1 am weitesten links liegt. Mit zunehmender Annäherung an das obere Ende 12 des Bandes 10 verläuft letzteres zunehmend flacher. Aufgrund der vorstehend beschriebenen Ausbildung des Bügelendstücks bilden der zweite Abschnitt 6 und der dritte Abschnitt 8 in der Ansicht gemäß den Fig. 1 und 2 ein Gebilde in Form einer schlanken Mondsichel.

Die Draufsicht gemäß Fig. 3 auf das Bügelendstück zeigt, daß der erste Abschnitt 2 und der zweite Abschnitt 6 etwas nach innen, d.h. zum Kopf bei aufgesetzter Brille, gebogen sind.

Das vorstehend beschriebene Bügelendstück kann einstückig mit dem Bügelschaft ausgebildet sein oder getrennt von diesem gefertigt werden und schließlich mit dem Schaftende 4 verbunden werden. Beim in den Fig. 1 bis 3 dargestellten ersten Ausführungsbeispiel ist das Bügelendstück zunächst getrennt vom Bügelschaft gefertigt worden und dann mit dessen Schaftende 4 verbunden worden. Zu diesem Zweck weist der erste Abschnitt 2 eine Längsbohrung 32 auf, in die eine beispielsweise aus einem geeigneten Kunststoff bestehende Büchse 34 eingesetzt ist. In die Büchse 34 wiederum ist das Schaftende 4 eingesetzt. Die Bohrung 32 und das Schaftende 4 bilden mit der zwischengeschalteten Büchse 34 eine Preßpassung. Sowohl auf der Außenseite des zylindrischen Schaftendes 4 als auch auf der Innenseite der Bohrung 32 können geeignete Vorsprünge vorgesehen sein, die sich in die Büchse 34 eindrücken und dadurch die durch die Preßpassung verursachte kraftschlüssige Verbindung durch Formschluß ergänzen. Die vorstehend beschriebene Verbindung zwischen dem Schaftende 4 und dem Bügelendstück ermöglicht es, den Bügelschaft und den ersten Abschnitt 2 bezüglich deren gemeinsamer Längsachse während der Montage relativ zueinander zu verdrehen, um den Abschnitten 6 und 8 des Bügelendstücks eine mehr oder weniger große Neigung nach innen, d.h. zum Kopf bei aufgesetzter Brille, zu geben.

Die Einheit aus den beiden Abschnitten 2 und 6 soll formstabil sein, und der dritte Abschnitt 8 soll eine hohe Flexibilität haben. Dies ist bei dem in den Fig. 1 bis 3 dargestellten Ausführungsbeispiel dadurch erreicht, daß der erste Abschnitt 2 und der zweite Abschnitt 6 aus einem anderen Werkstoff bestehen als der dritte Abschnitt 8. Bei dem Werkstoff der beiden Abschnitte 2 und 6 handelt es sich beispielsweise um einen duroplastischen oder thermoplastischen Kunststoff, beispielsweise ein Polyetherimid oder Polyethersulfon. Grundsätzlich kommt jeder Wekstoff in Frage, der sich für die tragenden Elemente herkömmlicher Brillenfassungen eignet. Das den dritten Abschnitt 8 bildende Band 10 ist einerseits in hohem Maße flexibel bzw. biegsam, andererseits im westenlichen längenstabil, d.h. weder dehn- noch stauchbar. Diese Eigenschaft hat das Band 10 bei bestimmungsgemäßem Gebrauch des Bügelendstücks, wie dies in der Beschreibungseinleitung erläutert ist. Darüber hinaus hat das Band 10 im unbelasteten Zustand des Bügelendstücks den gekrümmten Verlauf, wie er in den Fig. 1 und 2 gezeigt ist. Diesen Verlauf hat das Band 10 unabhängig davon, wie das Bügelendstück im Raum ausgerichtet ist, d.h. unabhängig davon, in welcher Richtung die Erdanziehung auf die Elemente des Bügelendstücks einwirkt. In diesem Sinne hat das Band 10 trotz seiner hohen Flexibilität eine gewisse Formstabilität.

Der dritte Abschnitt 8 des Bügelendstücks ist derjenige, der hauptsächlich oder ausschließlich mit dem Kopf und/oder der Ohrmuschel des Brillenträgers bei aufgesetzter Brille in Berührung steht. Dies zeigt vereinfacht Fig. 2, in der der Verlauf des dritten Abschnitts 8 und des Verbindungsbereichs 16 bei aufgesetzter Brille gestrichelt eingezeichnet ist, und ferner der Verlauf der Rille 36 zwischen der nicht dargestellten Ohrmuschel und dem nicht dargestellten Kopf des Brillenträgers strichpunktiert angedeutet ist. In dieser Rille verläuft das Band 10 bei aufgesetzter Brille. Zum Vergleich ist der Verlauf des dritten Abschnitts 8 und des Verbindungsbereichs 16 bei unbelastetem Bügelendstück mit ausgezogenen Linien in Fig. 2 gezeigt. Der dritte Abschnitt 8 verläuft somit bei aufgesetzter Brille entlang der Rille 36 in der Weise, daß sich das Band 10 und das nicht dargestellte Ohr im Bereich der Rille 36 über eine verhältnismäßig große Lange des Bandes 10 berühren, so daß ein verhältnismaßig großer Kontaktbereich zwischen dem Band 10 und der Ohrmuschel bzw. dem Schädel vorhanden ist.

Üblicherweise stimmen der Verlauf des Bandes 10 im unbelasteten Zustand und der Verlauf der Rille 36 (oder der Verlauf eines anderen für den Kontakt mit dem Bügelendstück bestimmten Bereichs des Ohres und/oder Kopfes) nicht überein. Beim Aufsetzen der Brille treten daher das Band 10 und beispielsweise die Ohrmuschel zunächst nur an einer Kontaktstelle, d.h. in einem kleinflächigen Bereich, miteinander in Berührung. Dadurch wiederum wird aufgrund der hohen Flexibilität des Bandes 10 dessen Verlauf geändert; es wird derart verformt, daß es auch in den sich an die erste Kontaktstelle anschließenden Bereichen in Kontakt mit der Ohrmuschel tritt, bis sich schließlich das Band 10 in seinem Verlauf der Geometrie der Ohrmuschel über eine große Länge des Bandes angeschmiegt hat. Dies ist dem Band 10 durch seine hohe Flexibilität ermöglicht. Außerdem ist dies dadurch ermöglicht, daß das Band 10 zwischen seinen beiden Enden 12 und 14 bereits im unbelasteten Zustand im wesentlichen bogenförmig gekrümmt verläuft, d.h. eine größer Länge hat, als zum direkten Verbinden der den beiden Enden 12 und 14 zugeordneten Orte notwendig ist. Die Länge des Bandes bzw. seiner Mittelinie zwischen den Enden 12 und 14 ist um eine hier so genannte "Überlänge" größer als der Abstand zwischen den den beiden Enden 12 und 14 zugeordneten Orten. Diese überlänge ermöglicht dem Band 10 eine Verformung zur Anpassung an die Geometrie der Ohrmuschel bzw. der Rille 36, ohne daß hierzu eine Dehnung und somit Erhöhung der Zugkräfte im Band 10 erforderlich wäre. Diese Verformung des Bandes 10 besteht im westenlichen aus Änderungen der Krümmungsradien an verschiedenen Stellen des Bandes 10, wobei es bis zur Ausbildung von Knickstellen kommen kann. Die Krümmung an den verschiedenen Stellen des Bandes kann sich dabei nicht nur in der Zeichenebene der Fig. 1 und 2, sondern auch senkrecht dazu ändern, so daß sich ggfs. ein dreidimensional mehrfach verwundener Verlauf ergibt.

Die vorstehend ausführlich erläuterte Ausbildung eines großen Kontaktbereichs zwischen dem Band 10 und der Ohrmuschel und/oder dem Kopf ist im wesentlichen nicht durch Dehnung und somit nicht durch nennenswerte Erhöhung der Zugkräfte im Band erzielt, so daß die Vergrößerung des Kontaktbereiches sich in einer entsprechenden Verringerung der Kontaktdrücke auswirkt. Wegen der Verformbarkeit des Bandes 10 bis zum Knicken entstehen auch an Vorsprüngen oder Knorpelkanten der Ohrmuschel keine Druckspitzen. Es ist somit eine äußerst bequeme Anlage des Bügelendstücks am Ohr und/oder Kopf des Brillenträgers gewährleistet.

Die auf den dritten Abschnitt 8 bzw. das Band 10 ausgeübte Stütz- und Tragkraft wird vom Band 10 zum übrigen Bügelendstück übertragen über zwei kurze Bereiche des Bandes 10, die die Verbindung zwischen dem anliegenden Bereich des Bandes 10 und dem ersten Abschnitt 2 bzw. dem Verbindungsbereich 16 darstellen. Der kurze Bereich am oberen Ende 12 überlicherweise auf Druck belastet, während der Bereich am unteren Ende 14 üblicherweise auf Zug belastet ist. Diese Zug- und Druckkräfte führen jedoch nicht zu einer nennenswerten Dehnung oder Stauchung des Bandes 10, so daß das Bügelendstück relativ zum Ohr und Kopf eine stabile Lage einnimmt und die Lage nicht von der Größe dieser Zug- und Druckkräfte abhängt. Wäre dem nicht so, könnten die beispielsweise durch Kopfbewegungen verursachten, an der Brille wirkenden Beschleunigung- und Verzögerungskräfte, die vom Band 10 in den Kontaktbereich einzuleiten sind, die Lage des Bügelendstücks relativ zum Ohr und Kopf verändern oder gar Wippbewegungen und Schwingungen induzieren.

Die vorstehend ausführlich erläuterten Eigenschaften des Bande 10 erhält dieses durch seine Form und die Stoffeigenschaften des Werkstoffs bzw. der Werkstoffe, aus denen es besteht. Bei gleichem Bandprofil und gleicher Querschnittsfläche nimmt der Biegewiderstand zu bzw. nimmt die Flexibiltät ab, wenn die Härte und der Elastizitätsmodul des Werkstoffs zunehmen. Grundsätzlich bestehen zahlreiche Möglichkeiten, Werkstoffeigenschaften und Abmessungen des Bandes in der Weise zu wählen und aufeinander abzustimmen, daß dem Band die vorstehend geschilderten Eigenschaften gegeben werden. Vorzugsweise kommt Gummi oder ein weicher, elastischer Kunststoff zur Anwendung, und zwar insbesondere ein Silikonkautschuk, ein thermoplastisches Polyurethan-Elastomer, ein Polyether-Block-Amid, ein Weich-Polyvinylchlorid oder ein Polyethylen. Dabei liegt die Shore-D-Härte - gemessen nach DIN 53505 - im Bereich von 5 bis 60 und insbesondere im Bereich von 20 bis 50. Bei 20°C liegt der Elastizitätsmodul vorzugsweise im Bereich von 1 bis 700 MPa und insbesondere im Bereich von 10 bis 300 MPa. Der Schub- bzw. Gleitmodul liegt vorzugsweise im Bereich von 0,5 bis 400 MPa und insbesondere im Bereich von 5 bis 170 MPa. Die Querzahl (Poissonsche Konstante) soll einen möglichst hohen Wert haben, damit das Verhältnis von Gleitmodul zu Elastizitätsmodul möglichst groß ist. Die Oberfläche des Bandes 10 soll weich und anschmiegsam sein und im übrigen die an Brillenwerkstoffe zu stellenden Forderungen erfüllen, nämlich Hautverträglichkeit, schweiß- und fettbeständig, lichtbeständig und alterungsbeständig sein.

Bei dem in den Fig. 1 bis 3 dargestellten ersten Ausführungsbeispiel kann das Band 10 über seine gesamte Länge ein Kreisprofil gemäß Fig. 7a mit einem Durchmesser von 2 mm haben und aus einem Polyether-Block-messer von 2 mm haben und aus einem Polyether-Block-Amid bestehen, beispielsweise dem von der Firma Atochem Deutschland GmbH, Düsseldorf, unter der Bezeichnung "Pebax 2533 SN 00" vetriebenen Werkstoff. Elastizitätsmodul von 20 MPa.

Ferner eignet sich als Werkstoff für das Band 10 des in den Fig. 1 bis 3 dargestellten ersten Ausführungsbeispiels ein thermoplastisches Polyurethan-Elastomer, beispielsweise der von der Firma Bayer AG, Leverkusen, unter der Bezeichnung "Desmopan 786" vertriebene Werkstoff. Dieser hat eine Shore-D-Härte von 33 und einen Elastizitätsmodul im Bereich von 30 bis 70 MPa.

Bei dem in den Fig. 1 bis 3 gezeigten ersten Ausführungsbeispiel sind das Band 10 und der Verbindungsbereich 16 einstückig aus dem gleichen Werkstoff gefertigt, so daß auch der Verbindungsbereich 16 einschließlich seines Schenkels 20 hohe Flexibilität hat. Dadurch ist das Verformungsverhalten des dritten Abschnitts 8 in einer Weise beeinflußt, wie dies im folgenden anhand von Fig. 2 erläutert wird. Im belasteten Zustand des Bügelendstücks wird vom Ende 14 des Bandes 10 ein Zug auf den kurzen Schenkel 22 des Verbindungsbereich 16 ausgeübt. Wenn nun auch der Schenkel 20 des hakenförmigen Verbindungsbereichs 16 hochflexible ist, wird er aufgrund dieser Zugkraft zusätzlich gekrümmt, so daß der Verbindungsbereich 16 ingesamt ungefähr um das obere Ende des Schenkels 20 nach oben geschwenkt wird und dadurch in die in Fig. 2 gestrichelt dargestellte Lage kommt. Einerseits wandert dabei das Ende 14 des Bandes 10 weiter nach oben (im Vergleich zum unbelasteten Zustand des Bügelendstücks), so daß die vorstehend erläuterte überlänge vergroßert wird und somit noch mehr überlange zum Anpassen des Bandverlaufs an die Ohrgeometrie zur Verfügung steht. Andererseits wird dadurch der Sektor 24 etwas nach vorne verlagert, während gleichzeitig der Winkel $\alpha$ verringert wird, was bedeutet, daß sich der Verbindungsbereich 16 von hinten und unten der Ohrmuschel nähert und sich quasi unter und hinter dem Ohr einhakt. Dadurch wird der Umschlingungswinkel der Ohrmuschel vergrößert und die Verankerung des Bügelendstücks am Ohr erhöht. Wie sich aus der vorstehenden Beschreibung ergibt, ist dies ein Vorgang, der selbsttätig beim Aufsetzen der Brille abläuft und keine zusätzliche Manipulation von Seiten des Brillenträgers erfordert.

Die vorstehend beschriebene Eigenschaft ist durch die Flexibilität des Schenkels 20 ermöglicht. Eine zu große Länge desselben würde die Haltefunktion, die der erste Abschnitt 2 und der zweite Abschnitt 6 für den dritten Abschnitt 8 erfüllen, beeinträchtigen. Der Schenkel 20 hat vorzugsweise eine Länge, die 5% bis 30% der Länge des zweiten Abschnitts 6 ausmacht.

Das beschriebene Bügelendstück, bei dem der erste und zweite Abschnitt einerseits und der dritte Abschnitt 8 mit dem Verbindungsbereich 16 andererseits aus verschiedenen Werkstoffen bestehen, kann grundsätzlich in der Weise gefertigt werden, daß die aus den verschiedenen Werkstoffen bestehenden Elemente getrennt gefertigt und dann auf geeignete Weise miteinander verbunden werden. Ferner konnen die drei Abschnitte 2, 6 und 8 und der Verbindungsbereich 16 des Bügelendstücks aus zwei verschiedenen Werkstoffen gleichzeitig durch Spritzgießen in ein und derselben Spritzgießform hergestellt werden. Das dargestellte Ausführungsbeispiel wird vorzugsweise durch Spritzgießen in der Weise hergestellt, daß zunächst in einer ersten Spritzgießform der erste Abschnitt 2 und der zweite Abschnitt 6 gemeinsam hergestellt werden und daß danach diese vorgefertigte Einheit aus den Abschnitten 2 und 6 in eine zweite Spritzgeißform eingesetzt wird und der dritte Abschnitt 8 mit dem Verbindungsbereich 16 angespritzt wird. Zu diesem Zweck weist der erste Abschnitt 2 eine von oben nach unten durchgehende öffnung 40 auf, durch die hindurch von oben (in Fig. 1) der Werkstoff für den dritten Abschnitt 8 und den Verbindungsbereich 16 eingespritzt wird und die schließlich von diesem Werkstoff gefüllt ist. Zur besseren Verankerung des oberen Endes 12 des Bandes 10 am ersten Abschnitt 2 weist letzterer zwei senkrecht zur Zeichenebene quer durch die öffnung 40 verlaufende Stege 42 auf, die vom Werkstoff des dritten Abschnitts 8 ringförmig umschlossen sind.

Am unteren Ende 18 des zweiten Abschnitts 6 ist ein Dorn 44 angeformt, der einen kleineren Durchmesser als das Ende 18 hat. Dieser Dorn ist radial außen vom Werkstoff des Schenkels 20 umgeben und weist eine Queröffnung 46 auf, die vom Werkstoff des Schenkels 20 ausgefüllt ist, so daß der Dorn 46 und der Schenkel 20 auch formschlüssig miteinander verbunden sind.

Es sind zahlreiche Abwandlungen des vorstehend beschriebenen ersten Ausführungsbeispiels des Bügelendstücks möglich. Einige Abwandlungen zeigen die Fig. 4 bis 7, in denen Elemente, die bereits anhand der Fig. 1 bis 3 erläutert sind, mit gleichen Bezugszeichen wie in den Fig. 1 bis 3 versehen sind und nicht erneut erläutert werden. Vielmehr werden lediglich die Unterschiede zur bisher beschriebenen ersten Ausführungsform erläutert.

Bei der Abwandlung gemäß Fig. 5 ist der Schenkel 20 mit einer Ausnehmung 48 versehen, durch die die Querschnittsfläche des Schenkels 20 im Bereich der Ausnehmung 48 verringert ist. Diese Querschnittsverringerung schwächt den Schenkel 20 und verringert somit seinen Biegewiderstand. Auf diese Weise kann das Biegeverhalten des Schenkels 20 beeinflußt bzw. gesteuert werden. Eine Beeinflussung des Biegeverhaltens des Schenkels 20 erfolgt im übrigen auch durch den Dorn 44 gemäß Fig. 1, der jedoch den Biegewiderstand des Schenkels erhöht.

Während bei der ersten Ausführungsform gemäß den Fig. 1 bis 3 der Verbindungsbereich 16 und der dritte Abschnitt 8 einstückig und aus dem gleichen Werkstoff hergestellt sind, sind bei der Abwandlung gemäß Fig. 6 der Verbindungsbereich 16 und der zweite Abschnitt 6 einstückig und aus dem gleichen Werkstoff hergestellt, so daß der übergang vom härteren zum weicheren Werkstoff zwischen dem kurzen Schenkel 22 und dem unteren Ende 14 des Bandes 10 erfolgt. Bei dieser Abwandlung ist somit auf die besonderen Eigenschaften verzichtet, die sich dann ergeben, wenn der Verbindungsbereich 16 ebenso wie der dritte Abschnitt 8 aus dem weichen Werkstoff gefertigt ist und einen stark flexiblen Schenkel 20 aufweist. Diese besonderen Eigenschaften sind vorstehend ausführlich erläutert.

Gemäß den Fig. 1 bis 3 weist das Band 10 einen kreisförmigen Querschnitt gemäß Fig. 7a auf, den das Band 10 von seinem oberen Ende 12 bis zu seinem unteren Ende 14 hat und den auch noch der Verbindungsbereich 16 aufweist, wobei über die gesamte Länge des Bandes 10 und des übergangsbereichs 16 außerdem die Querschnittsfläche konstant ist. Hiervon sind Abweichungen möglich. Fig. 7 zeigt außer dem Profil gemäß Fig. 7a in den Fig. 7b bis 7l elf Beispiele für weitere mögliche Profile des Bandes 10. Durch die Wahl des Profils können die Biegeweichheit und die Drucksteifheit des Bandes beeinflußt werden. Beispielsweise hat ein flachovales Profil, wie es die Fig. 7h, 7i und 7j zeigen, in Richtung seiner längeren Achse einen grösseren Biegewiderstand als senkrecht dazu. Über die Länge des Bandes 10 können verschiedene Profile vorgesehen sein. Eine vorteilhafte Abwandlung von der Ausbildung gemäß den Fig. 1 bis 3 besteht darin, daß das Band 10 an seinem oberen Ende 12 ein Profil gemäß Fig. 7l hat, an seinem unteren Ende 14 ein Profil gemäß Fig. 7h aufweist und zwischen seinen beiden Enden im wesentlichen mit dem Profil gemäß Fig. 7h aufweist und zwischen seinen beiden Enden im wesentlichen mit dem Profil gemäß Fig. 7d versehen ist.

Das Band 10 kann homogen und massiv sein, d.h. aus lediglich einem Werkstoff bestehen; der die gesamte Querschnittsfläche des Bandes füllt. Darüber hinaus kann das Band 10 aber auch inhomogen sein, d.h. aus mehreren verschiedenen Werkstoffen bestehen, wofür Fig. 7g ein Beispiel zeigt, gemäß dem das Band 10 einen fadenförmigen Kern 50 und einen den Kern 50 umgebenden Mantel 52 aufweist. Der fadenförmige Kern 50 kann beispielsweise aus Drahtlitze bestehen, die das Band 10 in Längsrichtung versteift bzw. verfestigt, und auf diese Weise dessen Dehn- und Stauchbarkeit niedrig hält, zugleich aber aufgrund ihres eigenen sehr geringen Querschnitts beim Auftreten von Querkräften, d.h. Kräften in der Zeichenebene von Fig. 7, nachgiebig und flexibel ist. Dieser Kern 50 ist von einem Mantel 52 aus sehr weichem Kunststoff umgeben, der dem Band 10 zu einer verhältnismäßig großen Oberfläche verhilft und sehr geringe Härte hat, so daß der Mantel 52 sich der Ohrmuschel bzw. dem Kopf anschmiegen kann und dabei jeder Unebenheit nachgibt.

Ferner kann das Band auch von einem kleinen Schlauch gebildet sein oder aus einem geschäumten Werkstoff bestehen, so daß es im Feinbereich inhomogen ist.

Eine Abwandlung der Verbindung des Bügelendstücks mit dem Schaftende 4 zeigt Fig. 4. Bei dieser Abwandlung ist der erste Abschnitt 2 auf seiner Außenseite mit einer in Fig. 4 nach rechts weisenden Schmulter 54 versehen. Ferner weist er einen in Richtung seiner Längsachse verlaufenden Schlitz 56 auf. In die Längsbohrung 32 ist das Schaftende 4 ohne zwischengefügte Büchse 34 eingesetzt. Außen auf dem ersten Abschnitt 2 sitzt eine Spännhülse 58, die die durch den Schlitz 56 voneinander getrennten Hälften des ersten Abschnitts 2 zueinander drückt und dadurch das Schaftende in der Längsbohrung 32 einklemmt und festhält. Die Spannhülse 58 ist von rechts in Fig. 4 auf den ersten Abschnitt 2 soweit aufgeschoben, daß ihr linkes Ende an der Schulter 34 anliegt. Die Außenseiten der Spannhülse 58 und des die Schulter 54 bildenden Bereichs des ersten Abschnitts 2 gehen stufenlos ineinander über. Die anhand von Fig. 4 beschriebene Verbindung erleichtert insbesondere das Anpassen der mit dem Bügelendstück versehenen Brille, da sie es ermöglicht, daß die Relativlage von Bügelendstück und Bügel, d.h. die Einstecktiefe des Schaftendes 4 in die Längsbohrung 32 und die Drehstellung des Bügelendstücks bezüglich der Längsachse des Bügels, erst vom Anpasser der Brille durch Aufschieben der Spannhülse 58 fixiert wird.

Im folgenden werden weitere Ausführungsformen der Erfindung erläutert, wobei auf die Unterschiede dieser Ausführungsformen zur ersten Ausführungsform gemäß den Fig. 1 bis 3 eingegangen wird. Elemente der Ausführungsformen gemäß den Fig. 8 bis 11, die mit Elementen der Ausführungsform gemäß den Fig. 1 bis 3 übereinstimmen, sind mit gleichen Bezugzeichen versehen und werden zur Vermeidung von Wiederholungen nicht erneut erläutert.

Bei der zweiten Ausführungsform gemäß Fig. 8 ist einstückig mit dem Schaftende 4 ein sichelförmig gekrümmtes Teil ausgebildet, das beispielsweise wie der Bügel aus Metall oder einem verhältnismäßig festen Kunststoff besteht. Dieses Teil bildet einen Kern 60 für den ersten Abschnitt 2 und den zweiten Abschnitt 6 des Bügelendstücks, die im übrigen im wesentlichen die gleiche Form wie bei dem ersten Ausführungsbeispiel gemäß den Fig. 1 bis 3 haben. Den Kern 60 umgibt eine Umhüllung 62 aus dem Werkstoff des den dritten Abschnitt 8 bildenden Bandes 10, wobei diese Umhüllung 62 beispielsweise um den Kern 60 gespritzt worden ist. Auf diese Weise erhält das gesamte Bügelendstück eine Oberfläche mit der Weichheit und Anschmiegsamkeit, die beim ersten Ausführungsbeispiel nur die Oberfläche des Bandes 10 bildenden Werkstoffs verursacht sind. Dabei sorgt jedoch die Einlage bzw. der Kern 60 dafür, daß die Einheit aus dem ersten Abschnitt 2 und dem zweiten Abschnitt 6 die erforderliche Formstabilität hat.

Neben dem Aufbau des ersten Abschnitts 2 und des zweiten Abschnitts 6 aus dem Kern 60 und der Umhüllung 62 weist die zweite Ausführungsform die weitere Besonderheit auf, daß sich die Querschnittsfläche und das Profil des Bandes 10 über dessen Länge ändern. Wie Fig. 8 zeigt, ist das Band 10 im Bereich der Stelle 30 schlank und dünn. Es hat dort ein Profil gemäß Fig. 7a. Dieser dünne, annähernd einen Faden bildende Bereich ist bei Ausbildung aus gleichem Werkstoff wie das Band 10 gemäß Fig. 1 - durch deutlich kleinere Kräfte verformbar als das Band 10 der Ausführungsform gemäß Fig. 1. Im Bereich der Stelle 30 ist eine derart schlanke und fadenförmige Ausbildung des Bandes 10 zulässig, da für die Beibehaltung des gekrümmten Verlaufs des dritten Abschnitts 8 im unbelasteten Zustand sowie für die übertragung der Stütz- und Tragkräfte vom Ohr und/oder Kopf zum Bügelendstück die sich oben und unten an den fadenförmigen Bereich anschließenden Bereiche des Bandes 10 sorgen. Wie Fig. 8 zeigt, wird das Band 10 oberhalb des fadenförmigen Bereichs zunehmend breiter, wobei seine Querschnittsfläche ebenfalls zunimmt. Im Bereich des oberen Endes 12 hat das Band schließlich ein Profil gemäß Fig. 7b. Auf ähnliche Weise wachsen Breite und Querschnittsflächen des Bandes 10 unterhalb des schlanken Bereichs in Richtung zum unteren Ende 14 an, wo schließlich das Profil und die Querschnittsfläche erreicht werden, wie sie dort bei der ersten Ausführungsform vorgesehen sind. Das Ausführungsbeispiel gemäß Fig. 8 zeigt somit, daß in denjenigen Berreichen des Bandes 10, in denen belastetem Bügelendstücke keine nennenswerten Zug- oder Druckkräfte auftreten und die zur Erhaltung des bogenförmig gekrümmten Verlaufs des dritten Abschnitts 8 nicht wesentlich beitragen, das Band 10 zur Erhöhung seiner Biegsamkeit fadenförmig dünn sein kann. Dabei ist jedoch zu beachten, daß es durch den fadenförmig dünnen Bereich nicht zu einem Einschneiden des Bandes in die Haut des Brillenträgers kommen soll.

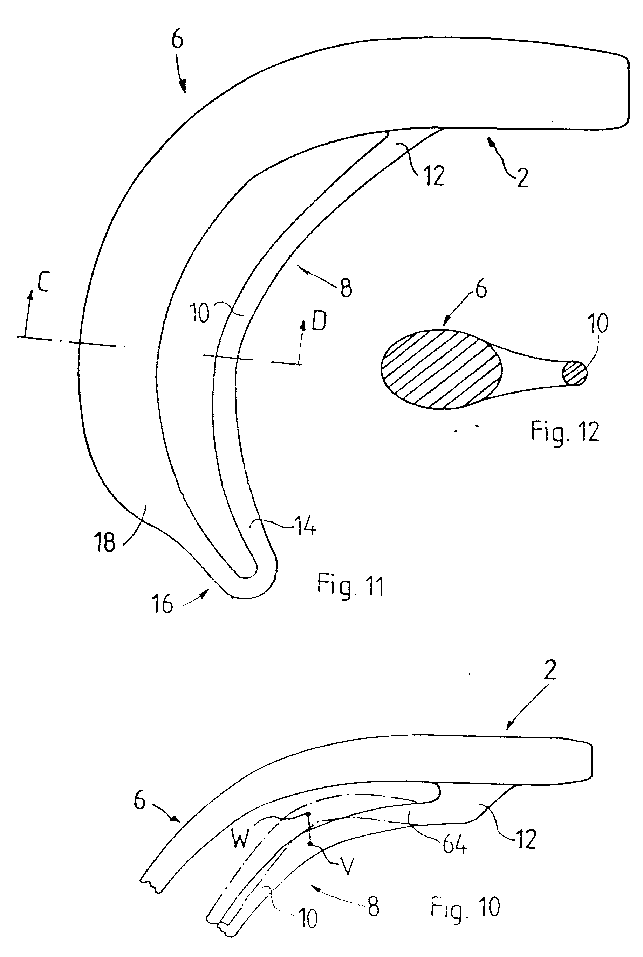

Bei der dritten Ausführungsform gemäß Fig. 10 ist das obere Ende 12 des Bandes 10 am ersten Abschnitt 2 weiter vorn befestigt als bei den zuvor beschriebenen Ausführungsbeispielen und Abwandlungen derselben. Nahe dem oberen Ende 12 verläuft ein Bereich 64 des Bandes 10 zunächst im wesentlichen parallel zum ersten Abschnitt 2 mit gewissem Abstand von diesem. An den Bereich 64 schließt sich dann der bogenförmig gekrümmt verlaufende Bereich an, wie er auch bei den zuvor beschriebenen Ausführungsbeispielen vorhanden und ausführlich erläutert ist. Dieser Bereich 64 ist aufgrund der im Band 10 herrschenden Kräfte im belasteten Zustand etwas nach oben gebogen, wie Fig. 10 gestrichet zeigt, was zur Folge hat, daß der beogenförmig gekrümmte Bereich des Bandes 10 insgesamt nach oben verlagert ist. Dies ist in Fig. 10 anhand eines Punktes veranschaulicht, der bei unbelastetem Bügelendstück den Ort v und bei belastetem Endstück den Ort w einnimmt. Dies wirkt sich insbesondere in Verbindung mit einem weichen Verbindungsbereich 16, wie er gemäß den Fig. 1 bis 3 und auch bei der Ausführungsform gemäß Fig. 8 vorgesehen ist, in der Weise günstig aus, daß der Verbindungsbereich 16 noch weiter nach vorn un oben gezogen wird, als dies bei dem Ausführungsbeispiel gemäß den Fig. 1 und 2 der Fall ist, so daß der anhand von Fig. 2 beschriebene Effekt des selbsttätigen Einhakens hinter dem Ohr noch verstärkt ist.

Ferner bildet bei dem Ausführungsbeispiel gemäß Fig. 10 der Bereich 64 eine weiche Auflage, wenn er in Kontakt mit dem Ohr kommen sollte.

Das vierte Ausführungsbeispiel gemäß den Fig. 11 und 12 unterscheidet sich vom ersten Ausführungsbeispiel im westenlichen dadurch, daß das gesamte Bügelendstück aus ein und demselben Werkstoff gefertigt ist, nämlich dem weichen Werkstoff des Bandes 10. In Anpassung an diese Werkstoffwahl haben der erste Abschnitt 2 und der zweite Abschnitt 6 eine verhältnismäßig große Querschnittsfläche, wie insbesondere Fig. 12 erkennen läßt. Dadurch ist der Einheit aus den beiden Abschnitten 2 und 6 trotz des weichen Werkstoffs die erforderliche Steifigkeit und Formstabilität gegeben. Besonderer Vorteil der Ausführungsform gemäß den Fig. 11 und 12 ist die Möglichkeit der einfachen Herstellung durch einstückiges Spritzgießen von Kunststoff.

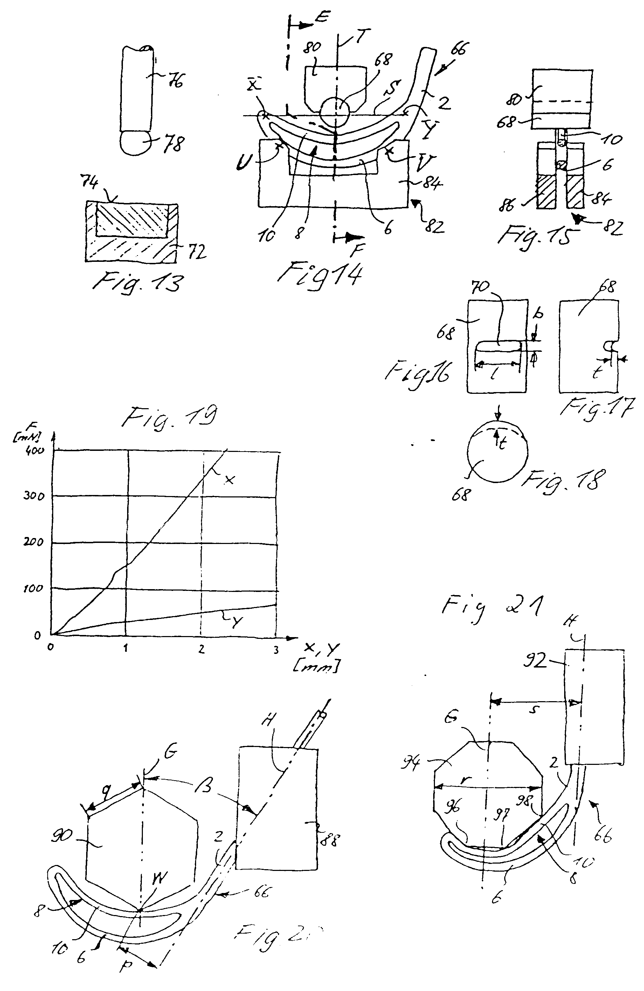

Zum Nachweis der günstigen Eigenschaften des erfindungsgemäßen Bügelendstücks wurden verschiedene Versuche durchgeführt, die im folgenden unter Bezugnahme auf die Fig. 13 bis 21 näher erläutert werden. Dabei wird zunächst eine erste Versuchsanordnung und erste Versuchsdurchführung unter Bezugnahme auf die Fig. 13 bis 18 erläutert.

Untersucht wurde ein Bügelendstück mit der Ausbildung gemäßt den Fig. 1 bis 3, wobei dessen Band 10 aus dem bereits weiter oben genannten Werkstoff "Desmopan 786" bestand. Das Band 10 hatte ein kreisförmiges Profil gemäß Fig. 7a mit einem mittleren Durchmesser von 2,1 mm. In Fig. 14 sind die beiden Endpunkte X und Y des dritten Abschnitts 8 des untersuchten Prüflings 66 eingezeichnet. Diese beiden Endpunkte X und Y liegen auf der Mittelinie des den dritten Abschnitt 8 bildenden Bandes 10 an denjenigen Stellen, an denen der dritte Abschnitt 8 übergeht in den ersten Abschnitt 2 bzw. den zweiten Abschnitt 6. Die beiden Endpunkte X und Y verbindet eine Strecke S, die bei dem hier beschriebenen Prüfling die Länge 45 mm hat. Der größte Abstand zwischen den Strecke S und der Mittellinie des Bandes 10 betrug beim Prüfling ungefähr 9 mm.

Bei dem ersten Versuch wurde ein zylindrischer Prüfkörper 68 aus einer plastischen Modelliermasse gegen das Band 10 gedrückt, wodurch in der plastischen Modelliermasse ein Abdruck 70 des Bandes 10 erzeugt wurde. Die Abmessungen dieses Abdrucks dienen bei diesem Versuch als Maß für das Anschmiegungsvermögen des den dritten Abschnitt 8 bildenden Bandes 10. Die Eigenschaften der plastischen Modelliermasse wurden in einem Vorversuch festgestellt. Als plastische Modelliermasse diente ein Gemisch auf der Basis von Kaolin, Zinkoxid, Kreide, Pigmenten, Wachsen und Ölen, wie es von der Firma Pelikan AG, Hannover, unter der Bezeichnung Plastilin 680 vertrieben wird. Eine solche Modelliermasse wurde in ein oben offenes Gefäß 72 (siehe Fig. 13) gefüllt und derart glattgestrichen, daß sich eine glatte, ebene Oberfläche 74 ergab. In diese Oberfläche wurde bei einer Temperatur von 20°C und 56% relativer Luftfeuchtigkeit eine an einem Halter 76 angebrachte Stahlkugel 78 gedrückt, die einen Durchmesser von 10 mm hatte. Der Vorschub der Stahlkugel 78 erfolgte senkrecht zur Oberfläche 74 mit einer Vorschubgeschwindigkeit von 1 mm/min. Der Vorschub dauerte an, bis der Widerstand, den die Modelliermasse im Gefäß 72 dem weiteren Vorschub der Kugel 78 entgegensetzte, den Wert 1,0 N erreicht hatte. Zu diesem Zeitpunkt wurde die Vorschubrichtung sofort umgekehrt, d.h. die Kugel 78 wurde danach mit unveränderter Geschwindigkeit, jedoch entgegengesetzer Bewegungsrichtung von der Oberfläche 74 entfernt. Bei diesem Vorsuch erzeugte die Kugel 78 in der Oberfläche 74 einen Abdruck mit einem Durchmesser von 2.2 mm.

Aus der Modelliermasse mit den durch den vorstehend erläuterten Vorversuch definierten Eigenschaften wurde der homogene, zylindrische Prüfkorper 68 geformt, der einen Durchmesser von 10 mm hatte. Der zylindrische Prüfkörper 68 wurde an einem Halter 80 derart befestigt, daß die halbe Mantelfläche des Prüfkorpers 68 nach unten freilag, wie dies die Fig. 14 und 15 erkennen lassen.

Der Prüfling 66 in Form des bereits vorstehend erläuterten Bügelendstücks wurde in eine Spannvorrichtung 82 eingespannt, die im wesentlichen aus zwei Spannbacken 84 und 86 besteht. Die beiden Spannbacken 84 und 86 berühren lediglich den zweiten Abschnitt 6 und halten dadurch das Bügelendstück bzw. den Prüfling 66, ohne den dritten Abschnitt 8 des Bügelendstücks zu berühren und an einer Auslenkung unter den im folgenden noch beschriebenen Versuchsbedingungen zu hindern. Der zweite Abschnitt 6 wurde an Einspannpunkten U und V gehalten, die einen Abstand von ungefähr 34 mm voneinander hatten.

Das Bügelendstück bzw. der Prüfling 66 und der Prüfkorper 68 wurden relativ zueinander derart angeordnet, daß die Strecke S senkrecht zur Längsachse des zylindrischen Prüfkorpers 68 verlief. Dies bedeutet mit anderen Worten, daß Längsachse des zylindrischen Prüfkörpers 68 senkrecht zur Zeichenebene von Fig. 14 verläuft, während die Strecke S in der Zeichenebene von Fig. 14 verläuft.

Der Prüfkörper 68 wurde dann in Richtung zum Prüfling 66 entlang einer geraden Bewegungsbahn T bewegt, die in Fig. 14 strichpunktiert eingezeichnet ist. Die Bewegungsbahn T ist definiert durch die Bahn, entlang derer sich der Mittelpunkt des zylindrischen Prüfkörpers 68 bewegt; der Mittelpunkt des zylindrischen Prüfkörpers 68 liegt in dessen Längsmitte auf dessen Längsachse. Die Bewegungsbahn T verläuft senkrecht zur Strecke S, halbiert letztere und schneidet sowohl das Band 10 als auch den zweiten Abschnitt 6 jeweils mittig. Die Einspannpunkte U und V hatten jeweils gleiche Abstände von der Bewegungsbahn T, so daß sie ebenso wie dei Endpunkte X und Y symmetrisch zur Bewegungsbahn T lagen.

Zur Erzeugung des Abdrucks 70 des Bandes 10 im Prüfkörper 68 wurde letzterer bei einer Temperatur von 20°C und einer relativen Luftfeuchtigkeit von 60% entlang der vorstehend erläuterten Bewegungsbahn T mit einer Vorschubgeschwindigkeit von 1 mm/min in Richtung zum Band 10 bewegt. Diese Bewegung wurde forgesetzt, bis die Andruckkraft des Prüfkörpers 68 gegen das Band 10 den Wert 0,5 N erreicht hatte. Danach wurde die Bewegungsrichtung des Prüfkorpers umgekehrt, d.h. er wurde wieder vom Band 10 entfernt.

Der durch das vorstehend erläuterte Andrücken erzeugte Abdruck 70 ist in den Fig. 16, 17 und 18 gezeigt. Dabei zeigt Fig. 16 eine Draufsicht auf den zylindrischen Prüfkörper 68 bei solcher Ausrichtung des Prüfkörpers 68, daß sich der Abdruck 70 mittig am Prüfkörper befindet, d.h. daß in Fig. 16 das linke Ende und das rechte Ende des Abdrucks 70 jeweils gleichen Abstand von der benachbarten, den Prüfkörper 68 begrenzenden Mantellinie haben. Wie insbesondere Fig. 18 erkennen läßt, ändert sich die Tiefe des Abdrucks 70 über seine Länge. Die größte Tiefe des Abdrucks 70 ist mit t bezeichnet. Ebenso ändert sich die Breite des Abdrucks 70 über seine Länge; die größte Breite des Abdrucks 70 is mit b bezeichnet. Ferner ist kennzeichnend für den Andruck der Abstand zwischen dem in Fig. 16 linken und rechten Ende des Abdrucks 70, der identisch ist mit der Länge l einer ebenen Projektion des Abdrucks 70.

Es wurden mehrere Messungen durchgeführt, aus denen sich folgende Mittelwerte für die Länge l, die Breite b und die Tiefe f ergaben:

l = 3,4 mm
b = 1,2 mm
t = 0,11 mm

$$l \times b = 4,08 \ mm^2$$

Es zeigt sich somit, daß das untersuchte Band 10 ein hohes Anschmiegungsvermögen hat, da es schon bei verhältnismäßig geringer Belastung einen großflächigen Abdruck erzeugt, was bedeutet, daß die vom Band 10 bei Anlage an einem Körper erzeugten Drücke niedrig sind. Auch die verhältnismäßig geringe Tiefe t zeigt, daß die Drücke niedrig sind. Schließlich zeigt die verhältnismäßig große Länge l des Abdrucks, daß das Band einer Anderung seiner eigenen Krümmung geringen Widerstand entgegensetzt und sich gut einem gekrümmten Körper anpaßt. Dies bedeutet mit anderen Worten, daß das Band 10 ein gutes Anschmiegungsvermögen hat.

Die bei dem vorstehend beschriebenen Versuch bewirkte Auslenkung des Bandes 10 entlang der Bewegungsbahn T betrug 2,0 mm. Der Verusch wurde unter ansonsten gleichen Bedingungen wiederholt, wobei jedoch der Prüfling aus seiner in Fig. 14 dargestellten Lage um 90° um die Strecke S gedreht bzw. verschwenkt war. Dies heißt mit anderen Worten, daß die Bewegungsbahn T nicht sowohl das Band 10 als auch den zweiten Abschnitt 6 mittig schnitt; sondern senkrecht zu der durch das Band 10 und den zweiten Abschnitt 6 definierten Ebene verlief. Während des Andrückens des Prüfkörpers 68 wurde somit das Band 10 nicht in Richtung zum zweiten Abschnitt 6 sondern quer ausgelenkt. Die dabei erreichte Auslenkung betrug unter ansonsten gleichen Bedingungen 4,1 mm. Dies bedeutet, daß das Band 10 quer zu der durch den zweiten Abschnitt 6 und den dritten Abschnitt 8 definierten Ebene noch leichter auslenkbar ist als in dieser Ebene. Der geringe Verformungswiderstand des Bandes 10 senkrecht zu der genannten Ebene ist besonders zweckmäßig, da sich das Band 10 somit im wesentlichen senkrecht zur Anlagefläche am Schädel praktisch widerstandslos verformen läßt und anpaßt. In der genannten Ebene dagegen ist der Vorformungswiderstand größer; dies ist auch zweckmäßig, da in dieser Ebene die Haltekräfte ausgeübt werden müssen, die zum Festhalten der Brille erforderlich sind.

In besonders vorteilhafter Ausbildung des erfindungsgemäßen Bügelendstücks ist somit vorgesehen, daß für den auf vorstehend ausführlich erläuterte Weise erzeugten Abdrucks gilt

$$l \times b \geq 3,5 \ mm^2$$

Dies bedeutet, daß der Abdruck zumindest die durch vorstehende Beziehung angegebene Größe haben soll. Ferner ist in vorteilhafter Ausbildung der Erfindung vorgesehen, daß die Tiefe t kleiner oder gleich 0,12 mm ist. Schließlich ist in vorteilhafter Ausbildung der Erfindung vorgesehen, daß die Länge l des Abdrucks grösser als 2,8 mm ist.

Im folgenden wird unter Bezugnahme auf die Fig. 19 und 20 ein zweiter Versuch und eine zweite Versuchsanordnung erläutert. Bei diesem zweiten Versuch geht es wiederum darum, das Anschmiegungsvermögen des Bandes 10 quantitativ zu beschreiben.

Der Prüfling 66 des zweiten Versuchs stimmt mit dem vorstehend ausführlich erläuterten Prüfling des ersten Versuches überein. Eine erneute ausführliche Beschreibung des Prüflings dürfte sich daher erübrigen.

Wie Fig. 20 erkennen läßt, umfaßt die Versuchsanordnung des zweiten Versuchs eine Spannvorrichtung 88, die das Bügelendstück an einer geradlinigen Verlängerung seines ersten Abschnitts 22 derart hält, daß das gesamte Bügelendstück im wesentlichen frei aus der Spannvorrichtung 88 vorsteht. Zur Versuchsanordnung gehört ferner ein stabförmiger Prüfkorper 90, der ein Profil in Form eines gleichseitigen, regelmäßigen Sechsecks hat, dessen Kantenlänge q 21 mm beträgt. Dieser Prüfkörper 90 wurde mit einer seiner Kanten gegen das den dritten Abschnitt 8 bildende Band 10 gedrückt, so daß sich an der Berührungsstelle zwischen dem Prüfkörper und dem Band ein Kontaktpunkt W ergab, dessen Auslenkung in Abhangigkeit von der am Kontaktpunkt W herrschenden Kraft gemessen wurde.

Der Prüfkörper 90 und der eingespannte Prüfling 66 wurden entlang einer in Fig. 20 strichdoppelpunktiert dargestellten Bewegungsbahn G relativ zueinander bewegt, die durch den Kontaktpunkt W und die Längsmittellinie des Prüfkörpers 90 verläuft kund außerdem die strichpunktiert in Fig. 20 dargestellte Längsachse H des ersten Abschnitts 2 des Prüflings 66 schneidet, und zwar unter einem Winkel β von 30°. Dabei waren der Prüfkörper 90 und der Prüfling 66 relativ zueinander derart angeordnet, daß zu demjenigen Zeitpunkt, zu dem der Prüfkörper 90 und der Prüfling 66 während der Bewegung des Prüfkorpers 90 in Richtung zum Band 10 erstmals in Berührung miteinander treten, der Kontaktpunkt W von der Längsachse H einen Abstand p von 16 mm hat.

Der Prüfkörper 90 wurde in Richtung zum Band 10 mit einer Vorschubgeschwindigkeit von 1 mm/min bewegt, und es wurden die Andruckkraft F zwischen dem Prüfkörper 90 und dem Band 10 sowie die durch diese Anddruckkraft verursachte Auslenkung x des Bandes 10 am Kontaktpunkt W entlang der Bewegungsbahn G gemessen. Das Ergebnis dieser Messung ist in Fig. 19 als Kurve x dargestellt. Ferner wurde eine zweite Meßreihe durchgeführt, bei der der Prüfkörper 90 senkrecht zur Zeichenebene von Fig. 20 gegen das Band 10 gedrückt wurde, wobei die Längsmittelinie des Prüfkörpers 90 parallel zur Längsachse H des ersten Abschnitts 2 verlief und der Abstand p 28 mm betrug. Die unter diesen Versuchsbedingungen in Richtung der Bewegungsbahn des Prüfkörpers gemessene Auslenkung y des Kontaktpunktes W des Bandes 10 ist in Fig. 19 als Kurve y eingezeichnet.

Die Versuchsergebnisse zeigen, daß im untersuchten Kräftebereich bis zu Andruckkräften von 400 mN ein im westenlichen linearer Zusammenhang zwischen der Auslenkung x bzw. y und der Andruckkraft F besteht.

Dabei werden schon durch verhältnismäßig niedrige Andruckkräfte F verhältnismäßig große Auslenkungen erzielt. Da diese Auslenkungen im wesentlichen nicht dadurch zustandekommen, daß das Band 10 sich unter Belastung dehnt, sondern dadurch, daß das Band 10 seine Form ändert und am Kontaktpunkt W um die dort befindliche Kante des Prüfkörpers 90 mit verhältnismäßig kleinem Krümmungsradius abbiegt, sind die gemessenen Auslenkungen x und y ein Maß für das Anschmiegungsvermögen des Bandes 10. Auffällig und günstig ist dabei wiederum, daß bei gleicher Kraft das Anschmiegungsvermögen bzw. die Auslenkung y senkrecht zur Zeichenebene von Fig. 20 duetlich größer ist als das Anschmiegungsvermögen bzw. die Auslenkung x bei Aufbringung der Andruckkraft entlang der Bewegungsbahn g in der Zeichenebene von Fig. 20. Dies bedeutet, daß der durch das Band 10 gebildete dritte Abschnitt 8 des Bügelendstücks im wesentlichen senkrecht zur Schädeloberfläche, an der er anliegt, praktisch widerstandlos verformbar ist, bei Zugbelastung im dem Bügelendstück zugeordneten Bügelschaft sich zwar der Rille zwischen Ohr und Schädel immer noch gut anschmiegt, jedoch dieser Zugbelastung auch den erforderlichen Widerstand entgegensetzt.

In vorteilhafter Ausbildung der Erfindung ist vorgesehen, daß für die Auslenkung x gilt:

$$\frac{x}{mm} \geq \frac{F/mN}{200} \text{,}$$

d.h. daß im hier betrachteten Bereich der Andkruckkräfte F von 0 bis 400 mN die Auslenkung zumindest den durch die vorstehende Ungleichung angegebenen Grenzwert hat. Ferner ist in vorteilhafter Ausbildung der Erfindung vorgesehen, daß für die Auslenkung y gilt:

$$\frac{Y}{mm} \geq \frac{F/mN}{50} \text{,}$$

d.h. daß im hier betrachteten Bereich der Andruckkraft F von 0 bis 100 mN die Auslenkung Y zumindest den durch die vorstehende Ungleichung angegebenen Grenzwert hat. Vorzugsweise ist sogar vorgesehen, daß gilt

$$\frac{Y}{mm} \geq \frac{F/mN}{25} \text{.}$$

Im folgenden wird unter Bezugnahme auf Fig. 21 ein dritter Versuch und eine dritte Versuchsanordnung beschrieben. Bei diesem dritten Versuch wird der gleiche Prüfling 66 untersucht, wie er auch im ersten Versuch untersucht worden ist, so daß sich eine erneute ausführliche Beschreibung des Prüflings 66 erübrigt. Die Versuchsanordnung umfaßt eine Spannvorrichtung 92, in der der erste Abschnitt 2 des den Prüfling 66 bildenden Bügelendstücks fest eingespannt ist, und zwar derart, daß der zweite Abschnitt 6 und der dritte Abschnitt 8 des Bügelendstücks von der Spannvorrichtung 92 nicht erfaßt sind und demzufolge unbehindert ausgelenkt werden können.

Zur Versuchsanordnung gemäß Fig. 21 gehört ferner ein stabförmiger Prüfkörper 94, der im Profil die Form eines gleichseitigen, regelmäßigen Achtecks hat und eine Schlüsselweite r von 35 mm aufweist. (Die Schlüsselweite r ist der Abstand zwischen zwei zueinander parallelen Seiten des stabförmigen Prüfkörpers 94). Der Prufkörper 94 besteht ebenso wie der Prüfkörper 90 der zweiten Versuchsanordnung aus einem Werkstoff, der sich unter den Versuchsbedingungen nicht verformt.

Der Prüfkörper 94 wurde entlang einer Bewegungsbahn G relativ zum Prüfling 66 bewegt, die parallel zu der Längsachse H des ersten Abschnitts 2 des Prüflings 66 verläuft, wobei der Abstand s zwischen der Bewegungsbahn G und der Längsachse H 29 mm betrug. Die gerade Bewegungsbahn G verlief senkrecht zur Längsmittellinie des Prüfkörpers 94 und außerdem mittig durch das Band 10. Um seine Längsmittellinie war der Prüfkörper 94 derart gedreht, daß zwei seiner Seiten parallel sowohl zur Bewegungsbahn G als auch zur Längsachse H ausgerichtet waren. Schließlich verlief die Längsmittellinie des Prüfkörpers 94 senkrecht zu der durch die Bewegungsbahn G und die Längsachse H definierten Ebene.

Zu Beginn des Versuches berührten sich der Prüfkörper 94 und der Prüfling 66 nicht. Der Prufkörper 94 wurde in Richtung zum Band 10 bewegt, wobei schließlich an einer Kante 96 des Prufkörpers 94 ein erster Kontakt mit dem Band 10 zustande kam. Während der weiteren Bewegung des Prüfkörpers 94 kam an der der Kante 96 benachbarten Kante 97 ein zweiter Kontakt mit dem Band 10 zustande, und schließlich kam an einer weiteren Kante 98 des Prüfkörpers 94 ein dritter Kontakt mit dem Band 10 zustande, so daß das Band 10 schließlich an den drei verschiedenen Kanten 96, 97 und 98 des Prüfkörpers 94 anlag, ohne daß dadurch eine Beschädigung des Bandes 10 oder des Prüflings 66 hervorgerufen war.

Die vorstehend beschriebene dreifache Anlage des Bandes 10 am Prüfkörper 94 ist dadurch zustandegekommen, daß sich das Band 10 verformt hat und in seinem Verlauf dem Profil des Prüfkorpers 94 angepaßt hat, wie dies in Fig. 21 erkennbar ist, die den Zustand zeigt, bei dem die Anlage an allen drei Kanten des Prüfkörpers gerade erreicht worden ist. Die Andruckkraft zwischen dem Prüfkörper 94 und dem Prüfling 66 lag für mehrere Proben des Prüflings 66 im Bereich von 1,8 bis 2,3 N.

Die Tatsache, daß das Band 10 im vorstehend beschriebenen Versuch an drei Kanten des Prüfkörpers 94 zur Anlage kam, ist ein Nachweis für das höhe Anschmiegungsvermögen des Bandes 10 bzw. des dritten Abschnitts 8 des untersuchten Bügelendstücks. Das erfindungsgemäße Bügelendstück ist daher vorzugsweise in einem solchen Ausmaß anschmiegsam, das den beschriebenen Drei-Kanten-Kontakt ermöglicht. Vorzugsweise soll die dabei herrschende Andruckkraft nicht mehr als 2,5 N betragen.

Das Bügelendstück für einen Bügel einer Brillenfassung weist eine formstabile Einheit aus einem im wesentlichen horizontalen ersten Abschnitt und einem bogenförmig nach hinten unten gekrümmten zweiten Abschnitt auf. Mit dieser Einheit verbunden ist ein dritter Abschnitt, der von einem weichen, flexiblen Band gebildet ist, dessen oberes Ende am ersten Abschnitt befestigt ist und dessen unteres Ende mit dem unteren Ende des zweiten Abschnitts fest verbunden ist. Dieses Band verläuft im unbelasteten Zustand des Bügelendstücks im wesentlichen bogenförmig gekrümmt, und zwar ähnlich wie der zweite Abschnitt. In seiner Längsrichtung ist das Band weder dehn- noch stauchbar. Aufgrund seiner hohen Flexibilität ist das Band bei aufgesetzter Brille dem Verlauf der Ohrmuschel bzw. des Kopfes des Brillenträgers angepaßt, so daß sich ein großer Kontaktbereich mit niedrigen Drücken einstellt und jeglichen Druckspitzen in diesem Kontaktbereich vorgebeugt ist. Wegen der Längenkonstanz des Bandes beeinträchtigt die flexible Ausbildung die Stabilität der Abstützung des Brillenbügels nicht.

**Patentansprüche**

1. Büglendstück für einen Bügel einer Brillenfassung mit einem im wesentlichen geraden und in Bügellängsrichtung verlaufenden ersten Abschnitt (2), einem bezüglich des ersten Abschnitts im wesentlichen nach schräg unten oder rechtwinklig nach unten verlaufenden zweiten Abschnitt (6), der an seinem oberen Ende fest mit dem ersten Abschnitt (2) verbunden ist, wobei der erste (2) und der zweite Abschnitt (6) eine im wesentlichen formstabile Einheit bilden, und einem dritten Abschnitt (8), der zur Anlage am Kopf und/oder hinter dem Ohr bestimmt ist, wobei der dritte Abschnitt (8) aus einem flexiblen Band (10) besteht, das mit seinem oberen Ende (12) am ersten Abschnitt (2) oder nahe dem ersten am zweiten Abschnitt (6) befestigt ist und dessen unteres Ende (14) mit dem unteren Ende (18) des zweiten Abschnitts (6) verbunden ist, dadurch gekennzeichnet, daß im unbelasteten Zustand des Bügelendstücks das den dritten Abschnitt (8) bildende Band (10) im wesentlichen bogenförmig gekrümmt verläuft, wobei die Außenseite der Krümmung nach hinten zum zweiten Abschnitt (6) gewandt ist, und daß das Band (10) in seiner Längsrichtung im wesentlichen weder dehn- noch stauchbar ist.

2. Bügelendstück nach Anspruch 1, dadurch gekennzeichnet, daß das Band (10) derart gekrümmt ist, daß eine Tangente (26) an das Band in dessen unterem Bereich mit der Längsachse des ersten Abschnitts einen Winkel ($\alpha$) kleiner als 90° einschließt.

3. Bügelendstück nach Anspruch 2, dadurch gekennzeichnet, daß der Winkel ($\alpha$) größer als 60° ist.

4. Bügelendstück nach Anspruch 3, dadurch gekennzeichnet, daß der Winkel ($\alpha$) im Bereich von 60° bis 80° liegt.

5. Bügelendstück nach einem der Ansprüche 1 bis 4, dadurch gekennzeichnet, daß im unbelasteten Zustand des Bügelendstücks das den dritten Abschnitt (8) bildende Band (10) zusäztlich im wesentlichen senkrecht zu der durch den ersten und zweiten Abschnitt (2 und 6) definierten Ebene gekrümmt ist.

6. Bügelendstück nach Anspruch 5, dadurch gekennzeichnet, daß die zusätliche Krümmung ungefähr dem Verlauf der Rille (36) zwischen Ohrmuschel und Kopf des Menschen folgt.

7. Bügelendstück nach einem der Ansprüche 1 bis 6, dadurch gekennzeichnet, daß der zweite Abschnitt (6) im wesentlichen bogenförmig gekrümmt ist, wobei die Innenseite der Krümmung nach vorne zum dritten Abschnitt (8) gewandt ist.

8. Bügelendstück nach einem der Ansprüche 1 bis 7, dadurch gekennzeichnet, daß der zweite Abschnitt (6) und der dritte Abschnitt (8) an ihren oberen Enden (12) jeweils glatt und stufenlos in den ersten Abschnitt (2) übergehen.

9. Bügelendstück nach einem der Ansprüche 1 bis 7, dadurch gekennzeichnet, daß im unbelasteten Zustand des Bügelendstücks der dritte Abschnitt (8) nahe seinem oberen Ende (12) im wesentlichen parallel zum ersten Abschnitt (2) mit Abstand von diesem verläuft, bevor er in den ersten Abschnitt übergeht.

10. Bügelendstück nach einem der Ansprüche 1 bis 9, dadurch gekennzeichnet, daß sich an den bogenförmig nach hinten gekrümmten Bereich des Bandes (10) ein hakenförmig nach hinten oben gekrümmter Verbindungsbereich (16) anschließt, der in den zweiten Abschnitt (6) übergeht.

11. Bügelendstück nach Anspruch 10, dadurch gekennzeichnet, daß im dem zweiten Abschnitt (6) zugeordneten Schenkel (20) des hakenförmigen Verbindungsbereichs (16) eine schwächende Querschnittsverringerung (48) ausgebildet ist.

12. Bügelendstück nach einem der Ansprüche 1 bis 11, dadurch gekennzeichnet, daß der erste Abschnitt (2), der zweite Abschnitt (6) und der dritte Abschnitt (8) aus dem gleichen Werkstoff bestehen.

13. Bügelendstück nach einem der Ansprüche 1 bis 11, dadurch gekennzeichnet, daß der erste Abschnitt (2) und der zweite Abschnitt (6) einen Kern (60) aufweisen, der der Einheit aus diesen beiden Abschnitten die Formstabilität gibt, und daß der Kern eine Umhüllung (62) aus einem Werkstoff trägt, der zugleich der Werkstoff des dritten Abschnitts (8) ist.

14. Bügelendstück nach einem der Ansprüche 1 bis 11, dadurch gekennzeichnet, daß der erste Abschnitt (2) und der zweite Abschnitt (6) im wesentlichen aus einem festen, ersten Werkstoff bestehen und daß der dritte Abschnitt (8) aus einem weicheren, zweiten Werkstoff besteht.

15. Bügelendstück nach den Ansprüchen 10 und 14, dadurch gekennzeichnet, daß der hakenförmige Verbindungsbereich (16) aus dem gleichen Werkstoff wie der dritte Abschnitt (8) besteht.

16. Bügelendstück nach Anspruch 14 oder 15, dadurch gekennzeichnet, daß der Werkstoff des dritten Abschnitts (8) Gummi oder ein elastischer Kunststoff ist.

17. Bügelendstück nach Anspruch 16, dadurch gekennzeichnet, daß der Werkstoff des dritten Abschnitts (8) ein Silikonkautschuk, ein thermoplastisches Polyurethan-Elastomer, ein Polyether-Block-Amid, ein Weich-Polyvinylchlorid oder ein Polyethylen-ist.

18. Bügelendstück nach Anspruch 16 oder 17, dadurch gekennzeichnet, daß der Werkstoff des dritten Abschnitts (8) eine Shore-D-Härte - gemessen nach DIN 53505 - im Bereich von 5 bis 60 hat.

19. Bügelendstück nach einem der Ansprüche 1 bis 18, dadurch gekennzeichnet,

a) daß das den dritten Abschnitt (8) bildende Band (10) in einem zylindrischen Prüfkörper (68) einen Abdruck (70) erzeugt, für den gilt

$l \times b \geq 3,5 \text{ mm}^2$

b) wobei der zylindrische Prüfkörper (68) einen Durchmesser von 10 mm hat und aus einer homogenen plastischen Modelliermasse besteht, in der eine Stahlkugel (78) von 10 mm Durchmesser bei 20°C und 60 % relativer Luftfeuchtigkeit einen Abdruck mit einem Durchmesser von 2,2 mm erzeugt, wenn die Stahlkugel mit einer Vorschubgeschwindigkeit von 1mm/min in eine ebene Oberfläche der Modelliermasse gedrückt wird, bis die Andruckkraft 1,0 N erreicht hat,

c) wobei zur Erzeugung des Abdrucks (70) des Bandes (10) dieses relativ zum Prüfkörper (68) derart angeordnet ist, daß eine die Endpunkte (X, Y) des dritten Abschnitts (8) verbindende Strecke (S) senkrecht zur Längsmittellinie des zylindrischen Prüfkörpers verläuft,

d) wobei zur Erzeugung des Abdrucks (70) des Bandes (10) dieses und der Prüfkörper (68) entlang einer geraden Bewegungsbahn (T) relativ zueinander bewegt werden, die senkrecht zu der Stecke (S) verläuft, diese halbiert und sowohl das Band als auch den zweiten Abschnitt (6) mittig schneidet,

e) wobei zur Erzeugung des Abdrucks (70) des Bandes (10) das Band und der Prüfkörper bei 20°C und 60 % relativer Luftfeuchtigkeit mit einer Vorschubgeschwindigkeit von 1mm/min zueinander bewegt werden, bis die Andruckkraft 0,5 N erreicht hat,

f) und wobei l die Länge der ebenen Projektion des Abdrucks (70) des Bandes und b die größte Breite des Abdrucks (70) des Bandes ist.

20. Bügelendstück nach Anspruch 19, dadurch gekennzeichnet, daß für die größte Tiefe t des Abdrucks (70) des Bandes (10) gilt
t ≤ 0,12 mm.

21. Bügelendstück nach Anspruch 19 oder 20, dadurch gekennzeichnet, daß für die Länge l der ebenen Projektion des Abdrucks (70) des Bandes (10) gilt
l ≥ 2,8 mm.

22. Bügelendstück nach einem der Ansprüche 1 bis 21, dadurch gekennzeichnet,

a) daß für die Auslenkung x des den dritten Abschnitt (8) bildenden Bandes (10) gilt

$$\frac{x}{\text{mm}} \geq \frac{F/\text{mN}}{200}$$

b) wobei ein stabförmiger Prüfkörper (90) mit einem regelmäßig sechseckigen Profil, dessen Kantenlänge 21 mm beträgt, mit einer seiner Kanten gegen einen Kontaktpunkt (W) am Band (10) mit einer Vorschubgeschwindigkeit von 1 mm/min gedrückt wird,

c) wobei zur Erzeugung der Auslenkung x des Bandes (10) dieses und der Prüfkörper (90) entlange einer geraden Bewegungsbahn (G) relativ zueinander bewegt werden, die durch den Kontaktpunkt (W) und senkrecht zur Längsmittellinie des Prüfkörpers (90) und durch diese verläuft und ferner die Längsachse (H) des ersten Abschnitts (2) des Bügelendstücks unter einem Winkel (β) von 30° schneidet,

d) wobei der Abstand (p) zwischen dem Kontaktpunkt (W) und der Längsachse (H) des ersten Abschnitts (2) zu dem Zeitpunkt, zu dem der Prüfkörper (90) den Kontaktpunkt (W) erstmals berührt, 16 mm beträgt,

e) und wobei x die entlang der Bewegungsbahn (G) gemessene Auslenkung des Bandes (10) und F die die Auslenkung verursachende Andruckkraft ist.

23. Bügelendstück nach einem der Ansprüche 1 bis 22, dadurch gekennzeichnet,

a) daß für die Auslenkung y des den dritten Abschnitt (8) bildenden Bandes (10) gilt

$$\frac{Y}{\text{mm}} \geq \frac{F/\text{mN}}{50}$$

b) wobei ein stabförmiger Prüfkörper (90) mit einem regelmäßig sechseckigen Profil, dessen Kantenlänge 21 mm beträgt, mit einer seiner Kanten gegen einen Kontaktpunkt (W) am Band (10) mit einer Vorschubgeschwindigkeit von 1 mm/min gedrückt wird,

c) wobei zur Erzeugung der Auslenkung y des Bandes (10) dieses und der Prükörper entlang einer geraden Bewegungsbahn relativ zueinander bewegt werden, die durch den Kontaktpunkt (W) und senkrecht zur Längsmittellinie des Prüfkörpers (90) durch diese verläuft sowie ferner senkrecht zu der durch die Längsachse (H) des ersten Abschnitts (2) und den zweiten Abschnitt (6) des Bügelendstücks bestimmte Ebene verläuft,

d) wobei die Längsmittellinie des Prüfkörpers (90) parallel zur Längsachse (H) des ersten Abschnitts (2) des Bügelendstücks verläuft,

e) wobei der Abstand zwischen dem Kontaktpunkt (W) und der Längsachse (H) des ersten Abschnitts (2) zu dem Zeitpunkt, zu dem der Prüfkörper (90) den Kontaktpunkt (W) erstmals berührt, 28 mm beträgt,

f) und wobei y die entlang der Bewegungsbahn gemessene Auslenkung des Bandes (10) und F die die Auslenkung verursachende Andruckkraft ist.

24. Bügelendstück nach Anspruch 23, dadurch gekennzeichnet, daß für die Auslenkung y gilt

$$\frac{Y}{mm} \geq \frac{F/mN}{25}.$$

25. Bügelendstück nach einem der Ansprüche 1 bis 24, dadurch gekennzeichnet,

a) daß das den dritten Abschnitt (8) bildende Band (10) an drei Kanten (96, 97, 98) eines stabförmigen Prüfkörpers (94) zerstörungsfrei zur Anlage bringbar ist,

b) wobei der Prüfkörper (94) ein regelmäßig achteckiges Profil mit einer Schlüsselweite von 35 mm hat,

c) wobei zur Herbeiführung der Anlage des Bandes (10) am Prüfkörper (94) der Prüfkörper und das Bügelendstück entlang einer geraden Bewegungsbahn (G) relativ zueinander bewegt werden, die parallel zur Längsachse (H) des ersten Abschnitts (2) des Bügelendstücks mittig durch das Band (10) verläuft und ferner senkrecht zur Längsmittellinie des Prüfkörpers (94) verläuft,

(d) wobei der Abstand (s) zwischen der Bewegungsbahn (G) und der Längsachse (H) 29 mm beträgt,

e) wobei der Prüfkörper (94) derart ausgerichtet ist, daß zwei seiner Seiten parallel zur Bewegungsbahn (G) und der Längsachse (H) verlaufen,

f) und wobei während der Anlage des Bandes (10) am Prüfkörper (94) das Bügelendstück allein an seinem ersten Abschnitt (2) festgehalten ist.

26. Bügelendstück nach Anspruch 25, dadurch gekennzeichnet, daß die Andruckkraft, die notwendig ist, um das Band (10) an den drei Kanten (96, 97, 98) des Prüfkörpers zur Anlage zu bringen, weniger als 2,5 N beträgt.

## Claims

1. Side-piece end for a side-piece of a spectacles frame, having a first section (2), which runs essentially straight and in the longitudinal direction of the side-piece, a second section (6), which runs essentially obliquely downwards or down at right angles with respect to the first section and is firmly connected at its upper end to the first section (2), the first section (2) and the second section (6) forming an essentially dimensionally stable unit, and having a third section (8), which is intended for bearing against the head and/or behind the ear, the third section (8) comprising a flexible band (10), which is fastened by its upper end (12) on the first section (2) or on the second section (6) close to the first section and the lower end (14) of which is connected to the lower end (18) of the second section (6), characterised in that, in the unloaded state of the side-piece end, the band (10) forming the third section (8) runs essentially in an arcuate curve, the outer side of the curvature facing rearwards towards the second section (6), and in that the band (10) is essentially neither extensible nor compressible in its longitudinal direction.

2. Side-piece end according to Claim 1, characterised in that the band (10) is curved in such a way that a tangent (26) to the band forms in its lower region an angle (α) less than 90° with the longitudinal axis of the first section.

3. Side-piece end according to Claim 2, characterised in that the angle (α) is greater is than 60°.

4. Side-piece end according to Claim 3, characterised in that the angle (α) lies in the range from 60° to 80°.

5. Side-piece end according to one of Claims 1 to 4, characterised in that, in the unloaded state of the side-piece end, the band (10) forming the third section (8) is additionally curved essentially perpendicularly to the plane defined by the first and second sections (2 and 6).

6. Side-piece end according to Claim 5, characterised in that the additional curvature approximately follows the shape of the recess (36) between the external ear and the head of the person.

7. Side-piece end according to one of Claims 1 to 6, characterised in that the second section (6) is essentially arcuately curved, the inner side of the curvature facing forwards towards the third section (8).

8. Side-piece end according to one of Claims 1 to 7, characterised in that the second section (6) and the third section (8) merge at their upper ends (12) in each case smoothly and continuously with the first section (2).

9. Side-piece end according to one of Claims 1 to 7, characterised in that, in the unloaded state of the side-piece end, the third section (8), close to its upper end (12), runs essentially parallel to the first section (2), at a distance from the latter, before it merges with the first section.

10. Side-piece end according to one of Claims 1 to 9, characterised in that the arcuately rearwardly curved region of the band (10) is adjoined by a connection region (16) curved rearwardly upwards in the form of a hook and merging with the second section (6).

11. Side-piece end according to Claim 10, characterised in that a weakening cross-sectional reduction (48) is formed in the limb (20) of the hook-shaped connecting region (16) assigned to the second section (6).

12. Side-piece end according to one of Claims 1 to 11, characterised in that the first section (2), the second section (6) and the third section (8) consist of the same material.

13. Side-piece end according to Claims 1 to 11, characterised in that the first section (2) and the second section (6) have a core (60), which gives the unit comprising these two sections dimensional stability, and in that the core bears a covering (62) of a material which is at the same time the material of the third section (8).

14. Side-piece end according to one of Claims 1 to 11, characterised in that the first section (2) and the second section (6) consist essentially of a rigid, first material and in that the third section (8) consists of a softer, second material.

15. Side-piece end according to Claims 10 and 14, characterised in that the hook-shaped connecting region (16) consists of the same material as the third section (8).

16. Side-piece end according to Claim 14 or 15, characterised in that the material of the third section (8) is rubber or a flexible plastic.

17. Side-piece end according to Claim 16, characterised in that the material of the third section (8) is a silicone rubber, a thermoplastic polyurethane elastomer, a polyether block amide, an unplasticised polyvinylchloride or a polyethylene.

18. Side-piece end according to Claim 16 or 17, characterised in that the material of the third section (8) has a Shore-D-hardness - measured in accordance with DIN 53505 - in the range from 5 to 60.

19. Side-piece end according to one of Claims 1 to 18, characterised in that
a) the band (10) forming the third section (8) produces in a cylindrical test piece (68) an impression (70) for which

l x b ≥ 3.5 mm$^2$,

b) where the cylindrical test piece (68) has a diameter of 10 mm and consists of a homogeneous plastic modelling compound, in which a steel ball (78) of 10 mm diameter produces an impression with a diameter of 2.2 mm at 20°C and 60 % relative atmospheric humidity when the steel ball is pressed at a rate of advancement of 1mm/min into a plane surface of the modelling compound until the pressing force has reached 1.0 N,
c) where, to produce the impression (70) of the band (10), the latter is arranged relative to the test piece (68) is such a way that a line (S) connecting the end points (X, Y) of the third section (8) runs perpendicularly to the longitudinal centre line of the cylindrical test piece,
d) where, to produce the impression (70) of the band (10), the latter and the test piece (68) are moved relative to each other along a straight movement path (T), which runs perpendicularly to the line (S), bisects the said line and intersects both the band and the second section (6) centrally,
e) where, to produce the impression (70) of the band (10), the band and the test piece are moved towards each other at 20°C and 60 % relative atmospheric humidity at a rate of advancement of 1mm/min until the pressing force has reached 0.5 N,
f) and where l is the length of the plane projection of the impression (70) of the band and b is the greatest width of the impression (70) of the band.

20. Side-piece end according to Claim 19, characterised in that, for the greatest depth t of the impression (70) of the band (10),
t ≤ 0.12 mm.

21. Side-piece end according to Claim 19 or 20, characterised in that, for the length l of the plane projection of the impression (70) of the band (10),
l ≥ 2.8 mm.

22. Side-piece end according to one of Claims 1 to 21, characterised in that,
a) for the deflection x of the band (10) forming the third section (8),

$$\frac{x}{mm} \geq \frac{F/mN}{200}$$

b) where a bar-shaped test piece (90) of a regularly hexagonal profile, the edge length of which is 21 mm, is pressed with one of its edges against a contact point (W) on the band (10) at a rate of advancement of 1mm/min,

c) where, to produce the deflection x of the band (10), the latter and the test piece (90) are moved relative to each other along a straight movement path (G), which runs through the contact point (W) and perpendicularly to the longitudinal centre line of the test piece (90) and through the said line and, furthermore, intersects the longitudinal axis (H) of the first section (2) of the side-piece end at an angle ($\beta$) of 30°,

d) where the distance (p) between the contact point (W) and the longitudinal axis (H) of the first section (2) is 16 mm at the point in time at which the test piece (90) touches the contact point (W) for the first time,

e) and where x is the deflection of the band (10), measured along the movement path (G), and F is the pressing force causing the deflection.

23. Side-piece end according to one of Claims 1 to 22, characterised in that

a) for the deflection y of the band (10) forming the third section (8),

$$\frac{Y}{mm} \geq \frac{F/mN}{50}$$

b) where a bar-shaped test piece (90) of a regularly hexagonal profile, the edge length of which is 21 mm, is pressed with one of its edges against a contact point (W) on the band (10) at a rate of advancement of 1mm/min,

c) where, to produce the deflection y of the band (10), the latter and the test piece are moved relative to each other along a straight movement path, which runs through the contact point (W) and perpendicularly to the longitudinal centre line of the test piece (90) and through the latter as well as, furthermore, perpendicularly to the plane determined by the longitudinal axis (H) of the first section (2) and the second section (6) of the side-piece end,

d) where the longitudinal centre line of the test piece (90) runs parallel to the longitudinal axis (H) of the first section (2) of the side-piece end,

e) where the distance between the contact point (W) and the longitudinal axis (H) of the first section (2) is 28 mm at the point in time at which the test piece (90) touches the contact point (W) for the first time,

f) and where y is the deflection of the band (10), measured along the movement path, and F is the pressing force causing the deflection.

24. Side-piece end according to Claim 23, characterised in that, for the deflection y,

$$\frac{Y}{mm} \geq \frac{F/mN}{25}$$

25. Side-piece end according to one of Claims 1 to 24, characterised in that

a) the band (10) forming the third section (8) can be brought to bear non-destructively against three edges (96, 97, 98) of a bar-shaped test piece (94),

b) where the test piece (94) has a regularly octagonal profile of a width over flats of 35 mm,

c) where, to bring about the bearing of the band (10) against the test piece (94), the test piece and the side-piece end are moved relative to each other along a straight movement path (G), which runs parallel to the longitudinal axis (H) of the first section (2) of the side-piece end centrally through the band (10) and, furthermore, runs perpendicularly to the longitudinal centre line of the test piece (94),

d) where the distance (s) between the movement path (G) and the longitudinal axis (H) is 29 mm,

e) where the test piece (94) is aligned in such a way that two of its sides run parallel to the movement path (G) and the longitudinal axis (H),

f) and where, during the bearing of the band (10) against the test piece (94), the side-piece end is held firm by its first section (2) alone.

26. Side-piece end according to Claim 25, characterised in that the pressing force which is necessary in order to bring the band (10) to bear against the three edges (96, 97, 98) of the test piece is less than 2.5 N.

## Revendications

1. Extrémité de branche de monture de lunettes, comportant une première section (2), sensiblement rectiligne et s'étendant en direction longitudinale de la branche, une deuxième section (6), qui s'étend sensiblement en biais vers le bas ou perpendiculaire vers le bas, par rapport à la première section, et est rigidement reliée à son extrémité supérieure à la première section, la première (2) et la deuxième section (6) formant un ensemble de forme pratiquement stable, et une troisième section (8), conçue pour venir en appui sur la tête et/ou derrière l'oreille, la troisième section (8) étant composée d'une bande flexible, fixée par son extrémité supérieure (12) sur la première section et dont l'extrémité inférieure (14) est reliée à l'extrémité inférieure (18) de la deuxième section (6), caractérisée en ce qu'à l'état non-chargé de l'extrémité de branche, la bande (10) qui forme la troisième section (8) s'étend suivant une courbure pratiquement en forme d'arc de cercle, la face extérieure de la courbure étant tournée, vers l'arrière, vers la deuxième section (6), et que la bande (20) est pratiquement ni extensible ni pliable en direction longitudinale.

2. Extrémité de branche selon la revendication 1, caractérisée en ce que la bande (10) est incurvée de façon qu'une tangente (26) à la bande, dans sa zone inférieure, fait avec l'axe longitudinal de la première section un angle (α) inférieur à 90°.

3. Extrémité de branche selon la revendication 2, caractérisée en ce que l'angle (α) est supérieur à 60°.

4. Extrémité de branche selon la revendication 3, caractérisée en ce que l'angle (α) est situé dans la plage allant de 60° à 80°.

5. Extrémité de branche selon l'une des revendications 1 à 4, caractérisée en ce qu'à l'état non chargé de l'extrémité de branche, la bande (10) qui forme la troisième section (8) est en plus incurvée, sensiblement perpendiculairement par rapport au plan défini par la première et la deuxième section (2 et 6).

6. Extrémité de branche selon la revendication 5, caractérisée en ce que la courbure supplémentaire suit à peu près l'allure du sillon (36) entre le pavillon de l'oreille et la tête du porteur.

7. Extrémité de branche selon l'une des revendications 1 à 6, caractérisée en ce que la deuxième section (6) est incurvée sensiblement en forme d'arc de cercle, la face intérieure de la courbure étant tournée vers l'avant, vers la troisième section.

8. Extrémité de branche selon l'une des revendications 1 à 7, caractérisée en ce que la deuxième section (6) et la troisième section (8) se transforment respectivement, à leurs extrémités supérieures (12), de façon régulière et continue, en la première section (2).

9. Extrémité de branche selon l'une des revendications 1 à 7, caractérisée en ce qu'à l'état non chargé de l'extrémité de branche, la troisième section (8) s'étend, près de son extrémité supérieure (12), sensiblement parallèlement à la première section (2) et à distance de cette dernière, avant de se transformer en la première section.

10. Extrémité de branche selon l'une des revendications 1 à 9, caractérisée en ce qu'une zone de liaison (16) en crochet et incurvée vers le haut et l'arrière, qui se transforme en la deuxième section (6), se raccorde à la zone, incurvée vers l'arrière en arc de cercle, de la bande (10).

11. Extrémité de branche selon la revendication 10, caractérisée en ce qu'une restriction de section transversale (48), à effet d'affaiblissement, est réalisée dans l'aile (20), associée à la deuxième section (6), de la zone de liaison en crochet (16).

12. Extrémité de branche selon l'une des revendications 1 à 11, caractérisée en ce que la première section (2), la deuxième section (6) et la troisième section (8) sont composées du même matériau.

13. Extrémité de branche selon l'une des revendications 1 à 11, caractérisée en ce que la première section (2) et la deuxième section (6) présentent un noyau (60), qui donne à l'ensemble composé de ces sections la stabilité de forme, et que le noyau porte un gainage (62) en un matériau qui est en même temps le matériau de la troisième section (8).

14. Extrémité de branche selon l'une des revendications 1 à 11, caractérisée en ce que la première section (2) et la deuxième section (6) sont essentiellement composées en un premier matériau rigide et que la troisième section (8) est composée en un matériau plus souple.

15. Extrémité de branche selon les revendications 10 et 14, caractérisée en ce que la zone de liaison en crochet (16) est composée du même matériau que la troisième section (8).

16. Extrémité de branche selon la revendication 14 ou 15, caractérisée en ce que le matériau de la troisième section (8) est le caoutchouc ou une matière synthétique élastique.

17. Extrémité de branche selon la revendication 16, caractérisée en ce que le matériau de la troisième section (8) est un caoutchouc au silicone, un élastomère à base de polyuréthane élastique, un amide à bloc polyéther, un polychlorure de vinyle souple ou un polyéthylène.

18. Extrémité de branche selon la revendication 16 ou 17, caractérisée en ce que le matériau de la troisième section (8) présente une dureté Shore D -mesurée suivant DIN 53505- située dans la plage allant de 5 à 60.

19. Extrémité de branche selon l'une des revendications 1 à 18, caractérisée en ce que :
a) la bande (10) qui forme la troisième section (8) produit dans une éprouvette cylindrique (68) une empreinte (70) pour laquelle

$l \times b \geq 3,5 \text{ mm}^2$,

b) l'éprouvette cylindrique (68) a un diamètre de 10 mm et est composée d'une masse de modelage plastique et homogène, dans laquelle une bille en acier (78) de diamètre 10 mm produit, à 20°C et pour une humidité relative de 60 %, une empreinte d'un diamètre de 2,2 mm, lorsque la bille en acier a été pressée avec une vitesse d'avance de 1 mm/min dans une surface plane de la masse de modelage, jusqu'à atteindre la force de pression 1,0 N,
c) cette dernière ayant été disposée par rapport à l'éprouvette (68), pour produire l'empreinte (70) de la bande (10), de façon qu'une droite (S) qui relie les points extrêmes (X,Y) de la troisième section (8) s'étende perpendiculairement à l'axe longitudinal de l'éprouvette cylindrique,
d) la bande et l'éprouvette (68) étant déplacées l'une par rapport à l'autre, pour produire l'empreinte (70) de la bande (10), suivant une trajectoire de déplacement (T) rectiligne, qui s'étend perpendiculairement à la droite (S), en passant par son milieu, et coupe au centre tant la bande qu'également la deuxième section (6),
e) la bande et l'éprouvette, à 20°C et pour une humidité relative de 60 %, ayant été déplacées l'une par rapport à l'autre, pour produire l'empreinte (70) de la bande (10), avec une vitesse d'avance de 1 mm/min, jusqu'à atteindre la force de pression 0,5 N,
f) l étant la longueur de la projection plane de l'empreinte (70) de la bande et b la plus grande largeur de l'empreinte (70) de la bande.

20. Extrémité de branche selon la revendication 19, caractérisée en ce que, pour la plus grande profondeur t de l'empreinte (70) de la bande (10), on a
$t \leq 0,12 \text{ mm}$.

21. Extrémité de branche selon la revendication 19 ou 20, caractérisée en ce que, pour la longueur l de la projection plane de l'empreinte (70) de la bande (10), on a
$l \geq 2,8 \text{ mm}$.

22. Extrémité de branche selon l'une des revendications 1 à 21, caractérisée en ce que
a) pour une déviation x de la bande (10) qui forme la troisième section (8), on a

$$\frac{X}{mm} \geqslant \frac{F/mN}{200}$$

b) une éprouvette (90) en forme de barre, avec un profil hexagonal régulier, dont le côté mesure 21 mm, étant pressée par l'une de ses arêtes contre un point de contact (W) situé sur la bande (10), avec une vitesse d'avance de 1 mm/min,
c) la bande et l'éprouvette (90) étant déplacées l'une par rapport à l'autre, pour produire la déformation x de la bande (10), le long d'une trajectoire de déplacement (G) rectiligne, qui passe par le point de contact (W) et perpendiculairement à l'axe longitudinal de l'éprouvette (90) et dans celle-ci, et l'axe longitudinal (H) de la première section (2) coupant en outre l'extrémité de branche en faisant un angle (β) de 30°,
d) la distance (p), entre le point de contact (W) et l'axe longitudinal (H) de la première section (2), au point auquel l'éprouvette (90) vient en premier toucher le point de contact (W), étant de 16 mm,

e) x étant la déformation, mesurée suivant la trajectoire de déplacement (G), de la bande (10) et F la force de pression qui provoque la déformation.

23. Extrémité de branche selon l'une des revendications 1 à 22, caractérisée en ce que,

a) pour la déformation y de la bande (10) qui forme la troisième section (8), on a

$$ \frac{Y}{mm} \gg \frac{F/mN}{50} $$

b) une éprouvette (90) en forme de barre, avec un profil hexagonal régulier, dont le côté est de 21 mm, étant pressée par l'une de ses arêtes contre un point de contact (W) situé sur la bande (10), avec une vitesse d'avance de 1 mm/min,

c) la bande et l'éprouvette (90) étant déplacées l'une par rapport à l'autre, pour produire la déformation x de la bande (10), le long d'une trajectoire de déplacement (G) rectiligne, qui passe par le point de contact (W) et perpendiculairement à l'axe longitudinal de l'éprouvette (90) et dans celle-ci , ainsi qu'en outre perpendiculairement au plan défini par l'axe longitudinal (H) et la première section (2) et la deuxième section (3) de l'extrémité de branche,

d) l'axe longitudinal de l'éprouvette (90) s'étendant parallèlement à l'axe longitudinal (H) de la première section (2) de l'extrémité de branche,

e) la distance (p), entre le point de contact (W) et l'axe longitudinal (H) de la première section (2), au point auquel l'éprouvette (90) vient en premier toucher le point de contact (W), étant de 28 mm,

e) et y étant la déformation, mesurée suivant la trajectoire de déplacement (G), de la bande (10) et F la force de pression qui provoque la déformation.

24. Extrémité de branche sel on la revendication 23, caractérisée en ce que l'on a pour la déformation :

$$ \frac{Y}{mm} \gg \frac{F/mN}{25} $$

25. Extrémité de branche selon l'une des revendications 1 à 24, caractérisée en ce que

a) la bande (10) qui forme la troisième section (8) peut venir en appui sur trois arêtes (96,97,98) d'une éprouvette (94) en forme de barre, sans provoquer de destruction,

b) l'éprouvette (94) étant un profilé octogonal régulier, avec une cote, sur plats, de 35 mm,

c) l'éprouvette (94), la bande et l'extrémité de branche étant déplacées l'une par rapport à l'autre, pour provoquer l'appui de la bande (10), sur une trajectoire de déplacement (G) rectiligne médiane de la branche 10, parallèle à l'axe longitudinal (H) de la première section (2) de l'extrémité de branche, et qui s'étend en outre perpendiculairement par rapport à l'axe longitudinal de l'éprouvette (94),

d) la distance (s) entre la trajectoire de déplacement (G) et l'axe longitudinal (H) étant de 29 mm,

e) l'éprouvette (94) étant orientée de façon que deux de ses côtés s'étendent parallèlement à la trajectoire de déplacement (G) et à l'axe longitudinal (H),

f) et pendant l'appui de la bande (10) sur l'éprouvette (94), l'extrémité de branche est fixée seule sur sa première section (2).

26. Extrémité de branche selon la revendication 25, caractérisée en ce que la force de pression nécessaire pour mettre la bande en appui (10) sur les trois arêtes (96,97,98) de l'éprouvette est inférieure à 2,5 N.

Fig. 4

Fig. 1

Fig. 2

Fig. 3

Fig. 9

60
62

Fig. 8

6
A
B
60
62
30
10
14
16

12
2
4
8

Fig. 6

6
8
10
14
18
20
22
16
24

Fig. 5

10
8
18
20
14
22
24
48
16

a   b   c
d   e   f
52
g   h   i
50
j   k   l

Fig. 7

24

6

2

12

C

8

D

10

6

10

18

Fig. 12

14

16

Fig. 11

2

6

W

64

V

8

10

Fig. 10

EP 0 202 556 B1

Fig. 13

Fig 14

Fig. 15

Fig 16

Fig. 17

Fig. 18

Fig. 19

Fig 21

Fig 20